# EUROPEAN PATENT APPLICATION

(11) **EP 4 503 842 A1**
(43) Date of publication of application: **05.02.2025**
(21) Application number: 23773905.7
(22) Date of filing: 22.03.2023
(51) Int. Cl.: H04W 76/15

(54) **PATH ESTABLISHMENT METHOD AND APPARATUS, TERMINAL, AND NETWORK SIDE DEVICE**

(30) Priority: 24.03.2022 CN 202210303654
(71) Applicant: VIVO MOBILE COMMUNICATION CO., LTD., Dongguan, Guangdong 523863 (CN)
(72) Inventor: LIU, Jiamin, Dongguan, Guangdong 523863 (CN); ZHENG, Qian, Dongguan, Guangdong 523863 (CN); KIMBA DIT ADAMOU, Boubacar, Dongguan, Guangdong 523863 (CN)
(74) Representative: Conti, Marco
(86) International application number: PCT/CN2023/083055
(87) International publication number: WO 2023/179658

(57) **Abstract**

This application discloses a path establishment method and apparatus, a terminal, and a network-side device, and belongs to the field of communication technologies. The path establishment method of embodiments of this application includes: When a first path is established, a first terminal establishes a second path with a network-side device. The first path is a direct path for the first terminal to communicate directly with the network-side device, and the second path is an indirect path for the first terminal to communicate with the network-side device by using a second terminal; or the first path is an indirect path for the first terminal to communicate with the network-side device by using the second terminal, and the second path is a direct path for the first terminal to communicate directly with the network-side device.

## Description

### CROSS-REFERENCE TO RELATED APPLICATIONS

This application claims priority to Chinese Patent Application No. 202210303654.6 filed in China on March 24, 2022, which is incorporated herein by reference in its entirety.

### TECHNICAL FIELD

This application relates to the field of communication technologies, and in particular, to a path establishment method and apparatus, a terminal, and a network-side device.

### BACKGROUND

In the conventional technology, a terminal can establish only a single-path connection with a network-side device, for example, can establish a direct path with the network-side device, or establish an indirect path with the network-side device. A throughput of the single-path connection is limited, and reliability needs to be improved.

### SUMMARY

Embodiments of this application provide a path establishment method and apparatus, a terminal, and a network-side device, which can improve a throughput and reliability of communication transmission.

According to a first aspect, a path establishment method is provided, including:

When a first path is established, a first terminal establishes a second path with a network-side device.

The first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

According to a second aspect, a path establishment apparatus is provided, including:
a first processing module, configured to: when a first path is established, establish a second path with a network-side device.

The first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

According to a third aspect, a path establishment method is provided, including:
When a first path is established, a network-side device establishes a second path with a first terminal.

The first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

According to a fourth aspect, a path establishment apparatus is provided, including:
a second processing module, configured to: when a first path is established, establish a second path with a first terminal.

The first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

According to a fifth aspect, a terminal is provided. The terminal includes a memory and a processor. The memory stores programs or instructions that are capable of being run on the processor, and when the programs or instructions are executed by the processor, the steps of the method according to the first aspect are implemented.

According to a sixth aspect, a terminal is provided, and includes a processor and a communication interface. The communication interface is configured to: when a first path is established, establish a second path with a network-side device.

The first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

According to a seventh aspect, a network-side device is provided. The network-side device includes a memory and a processor. The memory stores programs or instructions that are capable of being run on the processor, and when the programs or instructions are executed by the processor, the steps of the method according to the third aspect are implemented.

According to an eighth aspect, a network-side device is provided, and includes a processor and a communication interface. The communication interface is configured to: when a first path is established, establish a second path with a first terminal.

The first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

According to a ninth aspect, a path establishment system is provided, including: a network-side device and a terminal, where the network-side device can be used to perform the steps of the path establishment method according to the third aspect, and the terminal can be used to perform the steps of the path establishment method according to the first aspect.

According to a tenth aspect, a readable storage medium is provided. The readable storage medium stores programs or instructions, and when the programs or instructions are executed by a processor, the steps of the method according to the first aspect are implemented, or the steps of the method according to the third aspect are implemented.

According to an eleventh aspect, a chip is provided. The chip includes a processor and a communication interface. The communication interface is coupled to the processor, and the processor is configured to run a program or instructions, to implement the method according to the first aspect, or implement the method according to the third aspect.

According to a twelfth aspect, a computer program/program product is provided. The computer program/program product is stored in a storage medium. The computer program/program product is executed by at least one processor, to implement the steps of the path establishment method according to the first aspect, or implement the steps of the path establishment method according to the third aspect.

In embodiments of this application, a multi-path connection can be established between the first terminal and the network-side device. Different signaling and business data can be transmitted between the first terminal and the network-side device through a plurality of paths. This can improve a throughput of communication transmission. When link quality of one path is poor, another path with better link quality can be used to ensure reliability of transmission.

### BRIEF DESCRIPTION OF THE DRAWINGS

FIG. 1 is a block diagram of a wireless communication system applicable to an embodiment of this application;
FIG. 2 is a schematic diagram of a relay scenario;
FIG. 3 is a schematic diagram of an SL relay architecture;
FIG. 4 is a schematic diagram of a non-SL relay architecture;
FIG. 5 is a schematic flowchart of a path establishment method on a first terminal according to an embodiment of this application;
FIG. 6 is a schematic flowchart of a path establishment method on a network-side device according to an embodiment of this application;
FIG. 7 is a schematic diagram of a structure of a path establishment apparatus on a first terminal according to an embodiment of this application;
FIG. 8 is a schematic diagram of a structure of a path establishment apparatus on a network-side device according to an embodiment of this application;
FIG. 9 is a schematic diagram of a structure of a communication device according to an embodiment of this application;
FIG. 10 is a schematic diagram of a structure of a terminal according to an embodiment of this application; and
FIG. 11 is a schematic diagram of a structure of a network-side device according to an embodiment of this application.

### DETAILED DESCRIPTION

The following describes the technical solutions in embodiments of this application with reference to the accompanying drawings in embodiments of this application. It is clear that the described embodiments are a part rather than all of embodiments of this application. All other embodiments obtained by persons of ordinary skill in the art based on embodiments of this application shall fall within the protection scope of this application.

In the specification and claims of this application, the terms "first", "second", and the like are intended to distinguish between similar objects but do not necessarily indicate a specific order or sequence. It may be understood that the terms used in this way are interchangeable in an appropriate case, so that embodiments of this application may be implemented in a sequence other than those illustrated or described herein, and that the objects distinguished by "first" and "second" are usually of one type and a quantity of objects is not limited, for example, there may be one first object or a plurality of first objects. In addition, "and/or" used in this specification and the claims indicates at least one of connected objects. The character "/" generally indicates an "or" relationship between associated objects.

It is worth noting that, in addition to a long term evolution (Long Term Evolution, LTE)/LTE-advanced (LTE-Advanced, LTE-A) system, the technologies described in embodiments of this application may further be used in various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. The terms "system" and "network" in embodiments of this application are usually used interchangeably. The described technologies can be used in the systems and radio technologies mentioned above, and can also be used in other systems and radio technologies. The following describes a new radio (New Radio, NR) system for example purposes and uses NR terms in most of the following descriptions, but these technologies may also be used in applications other than NR system applications, such as a 6th generation (6th Generation, 6G) communication system.

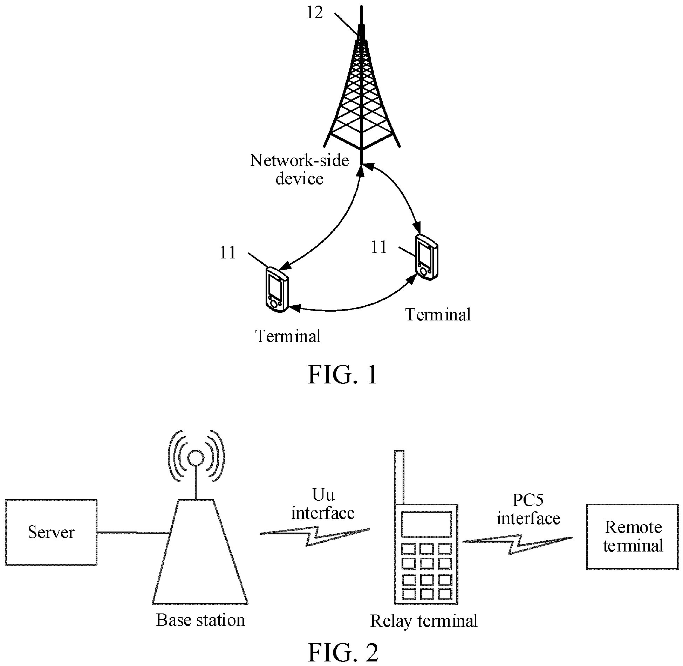

FIG. 1 is a block diagram of a wireless communication system applicable to an embodiment of this application. The wireless communication system includes a terminal 11 and a network side device 12. The terminal 11 may be a terminal side device, for example, a mobile phone, a tablet personal computer (Tablet Personal Computer), a laptop computer (Laptop Computer) or also referred to as a notebook computer, a personal digital assistant (Personal Digital Assistant, PDA), a handheld computer, a netbook, an ultra-mobile personal computer (Ultra-Mobile Personal Computer, UMPC), a mobile internet device (Mobile Internet Device, MID), an augmented reality (Augmented Reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, for example, a refrigerator, a television, a washing machine, or a furniture), a game console, a personal computer (Personal Computer, PC), a teller machine, or a self-service machine. The wearable device includes: a smartwatch, a smartband, a smart headset, smart glasses, smart jewelry (a smart wristlet, a smart bracelet, a smart ring, a smart necklace, a smart anklet, and the like), a smart wristband, smart clothing, and the like. It should be noted that a specific type of the terminal 11 is not limited in embodiments of this application. The network side device 12 may include an access network device or a core network device. An access network device may also be referred to as a radio access network device, a radio access network (Radio Access Network, RAN), a radio access network function, or a radio access network unit. The access network device may include a base station, a WLAN access point, a Wi-Fi node, and the like. The base station may be referred to as a nodeB, an evolved nodeB (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmitting receiving point (Transmitting Receiving Point, TRP), or another suitable term in the art. The base station is not limited to a specific technical term as long as the same technical effect is achieved. It should be noted that, in embodiments of this application, only a base station in an NR system is used as an example, but a specific type of the base station is not limited.

In a relay (Relay) technology in a wireless communication system, one or more relay nodes are added between a base station and a terminal, and are responsible for forwarding a wireless signal one or more times, that is, the wireless signal needs to go through a plurality of hops to reach the terminal.

The wireless relay technology can not only be used to expand cell coverage and compensate for blind spots in cell coverage, but also to enhance cell capacity through spatial resource reuse. For indoor coverage, the relay technology can also overcome a penetration loss, and improve quality of indoor coverage.

A simple two-hop relay is used as an example. A wireless relay is to divide a base station-terminal link into two links: base station-relay station and relay station-terminal. This provides an opportunity to replace a poor quality link with two better quality links, to achieve higher link capacity and better coverage.

A currently supported relay is user equipment to a network relay (UE-to-Network relay). One end of the relay is connected to the user equipment (User Equipment, UE), and the other end is connected to a network side. The UE connected to the relay is referred to as remote UE (Remote UE).

A typical relay scenario is shown in FIG. 2, which is a typical UE-to-Network scenario. When the remote UE needs to transmit data with the network side, but due to poor coverage, the remote UE needs to find relay UE for forwarding. A cellular network communication interface (Uu interface) is between the relay UE and a base station, and a sidelink (sidelink) (direct communication interface (PC5)) interface is between the relay UE and the remote UE. Generally, the relay UE is open, and can serve any remote UE.

In the conventional technology, a remote UE radio resource control (Radio Resource Control, RRC) connection establishment process includes the following steps.

Step 1: The remote UE and the relay UE perform a discovery process (discovery), and then establish a PC5 RRC connection.

Step 2 The remote UE sends an RRC setup request (RRCSetupRequest) message to the base station, and the base station replies with an RRC setup (RRCSetup) message to the remote UE. Specifically, these two messages are forwarded by the relay UE to the base station or the remote UE.

Step 3 A signaling radio bearer 1 (Signaling Radio Bearer 1, SRB 1) dedicated bearer is established between the base station and the remote UE, and the remote UE SRB 1 dedicated bearer consists of two segments of radio link control (RLC) channels: PC5 (between the remote UE and the relay UE) and Uu (between the relay UE and the base station). Specifically, the two segments of RLC channels are used for the remote UE to send or receive an RRC message of an SRB 1 type between the remote UE and the base station.

Step 4: The remote UE sends an RRC setup complete message (RRCSetupComplete) to the base station. Specifically, the messages are forwarded by the relay UE to the base station.

Step 5: Activation between the remote UE and the base station is security.

Step 6: An SRB 2/data radio bearer (Data Radio Bearer, DRB) dedicated bearer is established between the base station and the remote UE, and the remote UE SRB 2/DRB dedicated bearer consists of two segments of RLC channels: PC5 (between the remote UE and the relay UE) and Uu (between the relay UE and the base station). Specifically, the two segments of RLC channels are used for the remote UE to send/receive an RRC/network attached storage (Network Attached Storage, NAS) messages of an SRB 2 type and uplink/downlink service data between the remote UE and the base station.

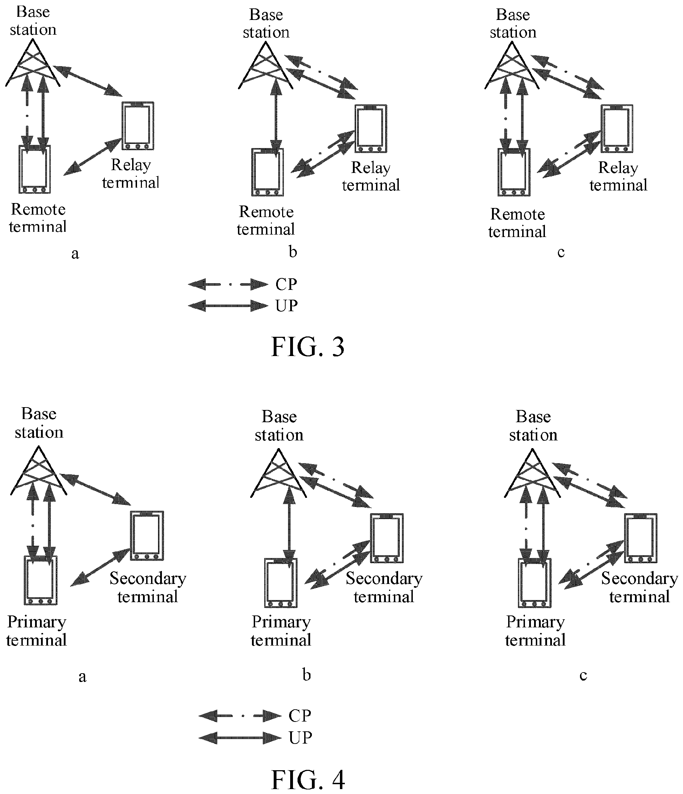

For a sidelink relay (SL relay architecture), multi-path means that the remote UE establishes both an indirect path (indirect path) and a direct path (direct path), as shown in FIG. 3.

For a non-SL relay architecture, a connection between two UEs is not a sidelink (PC5) interface. It is assumed that the interface between the two UEs is a wired connection or an ideal inter-UE connection (ideal inter-UE connection). Herein, multi-path means that the primary UE establishes both an indirect path and a direct path, as shown in FIG. 4.

In embodiments, the indirect path, translated as a non-direct connection path, is a radio link in which the remote UE (or primary UE) establishes an RRC connection with the base station through the relay UE (or secondary UE) and a Uu air interface of the relay UE (or secondary UE).

The direct path, translated as a direct connection path, is a radio link in which the remote UE (or primary UE) establishes an RRC connection with the base station through a Uu air interface of the remote UE (or primary UE).

A path establishment method according to an embodiment of this application may be described in detail with reference to the accompanying drawings through some embodiments and application scenarios thereof.

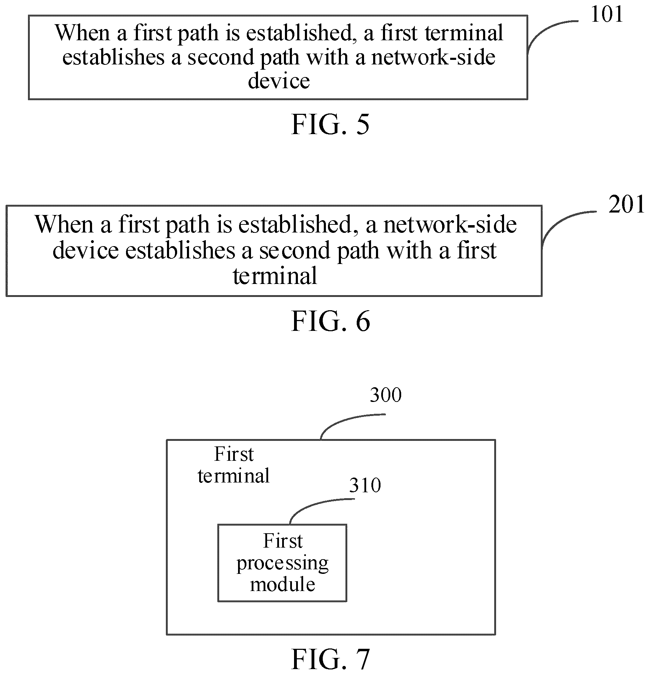

An embodiment of this application provides a path establishment method. As shown in FIG. 5, the method includes the following steps.

Step 101: When a first path is established, a first terminal establishes a second path with a network-side device.

The first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

In this embodiment of this application, a multi-path connection can be established between the first terminal and the network-side device. Different signaling and business data can be transmitted between the first terminal and the network-side device through a plurality of paths. This can improve a throughput of communication transmission. When link quality of one path is poor, another path with better link quality can be used to ensure reliability of transmission.

In this embodiment, the first terminal may be remote UE or primary UE, and the second terminal may be relay UE or secondary UE.

In some embodiments, the establishing a second path with a network-side device includes:

When a first path establishment condition is met,
the first terminal sends a first request to the network-side device, where the first request is used to request to establish the second path.

The first path establishment condition can be specified in a protocol, configured by the network-side device, or pre-configured by the network-side device.

In a specific embodiment, the first terminal has already established an RRC connection and a related user plane (UP) path with the network-side device through the indirect path. The first terminal can use the existing indirect path to establish the direct path with the network-side device.

Specifically, when remote UE or first UE (primary UE) is at the edge of a cell or a link condition is poor, for example, a reference signal received power (RSRP) from the first UE to a serving cell is below a specified threshold, if the first UE needs to transmit data, the first UE can find appropriate relay UE or second UE (secondary UE) (the second UE has good link quality assurance to the network side, for example, an RSRP of the second UE is higher than the specified threshold, optionally, a maximum RSRP threshold may be configured, and the RSRP of the second UE cannot exceed the maximum RSRP threshold, to avoid excessive interference when the second UE that is very close to the base station transfers data), establish an RRC connection to the serving cell through the relay UE or secondary UE, establish a DRB path, that is, establish an indirect control plane+user plane (indirect CP+UP) path, and can transmit control plane data and user plane data through the indirect path.

The path establishment method in this embodiment includes the following steps.

Step a1: The first terminal determines whether the preset first path establishment condition is met, where the preset first path establishment condition specifically includes at least one of the following:
a data buffer size of the first terminal is greater than or equal to a first threshold;
a service reliability requirement parameter of the first terminal is greater than or equal to a second threshold, where the service reliability requirement parameter is related to a packet loss rate and/or bit error rate, and the packet loss rate and/or bit error rate are inversely proportional to the service reliability requirement parameter;
an upper layer protocol of the first terminal requires a service to be transmitted through the second path or through the first path and the second path, where the upper layer protocol is an upper layer entity above an RRC layer in the first terminal;
a paging message is received from the network-side device;
link quality between the first terminal and a serving base station meets a communication condition, for example, an RSRP is greater than a specified threshold;
the first terminal is allowed to perform multi-path transmission; and
at least some services of the first terminal are allowed to be transmitted in a plurality of paths, where at least some services include one or more services of the first terminal.

For a scenario in which downlink data arrives, it may be necessary to enhance a paging message (paging message) by sending the paging message to the first terminal, to indicate a path establishment method of the UE in the paging message, where the paging message carries at least one of the following information:
indicating the first terminal to establish the first path and/or the second path, that is, indicating the first terminal to establish a single path or a plurality of paths, and if a single path is established, indicating to establish the first path or the second path; and
when indicating the first terminal to establish a single path, indicating whether the established path is a direct path or an indirect path.

If the paging message is encoded with 1 bit, it can be distinguished as single path (either direct or indirect path), and multi-path (both direct and indirect path). If the paging message is encoded with 2 bits, it can be distinguished as single path (direct path only), single path (indirect path only), and multi-path (both direct and indirect path).

Step a2: When the first terminal determines that the preset first path establishment condition is met, the first terminal sends a first request (aggregation request) to the network-side device, to request to add the second path.

An existing message can be used to carry the first request, or a new first request can be defined. The existing message includes at least one of the following: UE assistance information (UE Assistance Information, UAI), sidelink user equipment information (Sidelink UE Information, SUI), a measurement report (Measurement Report), a radio resource control setup complete (RRC Setup Complete) message, and a radio resource control resume complete (RRC Resume Complete) message.

Further, the first request further includes first information, and the first information includes at least one of the following:
signal quality between the first terminal and the second terminal;
identification information of the second terminal;
serving cell identification information of the second terminal;
signal quality between the second terminal and the network-side device; and
signal quality between the first terminal and the network-side device.

The first information is sent to the network-side device, to help the network-side device obtain related information about a to-be-established direct path.

Step a3: The first terminal receives first indication information from the network-side device, where the first indication information is used to indicate to establish the second path.

An existing message can be used to carry the first indication information, or one piece of new first indication information can be defined. The existing message includes an RRC reconfiguration with sync (reconfiguration with sync) message.

The first terminal further receives at least one of the following information from the network-side device:
configuration information of the direct path between the first terminal and the network-side device, for example, a radio link control (Radio Link Control, RLC) bearer configuration, a mapping relationship between an RLC bearer and a UE DRB, a media access control (MAC) configuration, and a physical layer (PHY) configuration;
serving cell identification information of the first terminal;
second indication information, indicating an action that needs to be executed by a layer 2 after a path is added; and
a rule for transmitting user plane data through the first path and the second path.

After two paths (the indirect path and the direct path) are established, for a data bearer of the first terminal, how to transmit data in the two paths can be configured by the network-side device in a user plane data transmission rule. The rule may include any of the following:
a first part of a data radio bearer DRB of the first terminal is transmitted in only the direct path;
a second part of the DRB of the first terminal is transmitted in only the indirect path, where the second part of the DRB may be a DRB other than the first part of the DRB;
different parts of the DRB of the first terminal are transmitted in both the direct path and the indirect path, and different paths can be selected for different data packets according to a rule, for example, data packets with sequence numbers 1 to 5 are transmitted through the indirect path, and data packets with sequence numbers 6 to 10 are transmitted through the direct path, which can improve a transmission rate of the data packet; and
the DRB of the first terminal is transmitted in both the direct path and the indirect path after replication, that is, a same data packet can be replicated and then transmitted in the two paths, which can improve reliability of transmission of the data packet.

Further, when different parts of the DRB of the first terminal are transmitted in both the direct path and the indirect path, or when the DRB of the first terminal is transmitted in both the direct path and the indirect path after replication, the rule includes any one of the following:
the DRB is transmitted by default in the first path or the second path, where the first path or the second path is a main path and a preferred path for data packet transmission;
after a preset condition parameter, for example, a data volume threshold, a data waiting time threshold, a link quality threshold, and a link load threshold, is satisfied, the DRB is transmitted in both the direct path and the indirect path, in general, DRB data of the first UE is transmitted first in the primary path, and only after this condition is met, any path or another path can be selected for transmission, for example, if link quality of the primary path is lower than the link quality threshold and/or link quality of another path is higher than the link quality threshold, any path or other path can be selected for transmission; or only when a link load of a main path is higher than the link load threshold and/or a link load of another path is lower than the link load threshold, any path or other path can be selected for transmission;
the DRB is transmitted in both the direct path and the indirect path after duplication, a switch is configured for a DRB of each terminal, once the switch is configured or activated, all data packets of the DRB are replicated and then transmitted in the two paths, and when the switch is reconfigured or deactivated, the DRB data of the first UE is transmitted in the main path; and
duplication is performed or not performed on the DRB, the rule includes an initial state of a duplication (duplication) function, after the duplication function is enabled, the initial state can be configured an activated state or a deactivated state, a duplication operation can be performed based on this state, and subsequently, duplication activation or deactivation can be performed again through RRC, a MAC control element (CE), or L1 signaling.

In some embodiments, the main path may not be configured, so that any path can be selected for data, which is determined by the UE or based on path quality or a path load.

In the foregoing steps, the first indication information indicates an action that a layer 2 needs to perform after a path is added. After an UP path is added, the action that the layer 2 needs to perform includes at least one of the following:
whether a packet data convergence protocol PDCP entity corresponding to the DRB needs to be reestablished, where when a security parameter or another configuration parameter changes, PDCP establishment is required, otherwise, establishment is not required;
whether data recovery needs to be performed for the PDCP entity corresponding to the DRB, where when specified control needs to be performed on a receiving status of a peer end, PDCP data recovery can be performed, to trigger status reporting and retransmission, otherwise, data recovery is not required;
whether a new radio link control RLC entity corresponding to the DRB needs to be established, where a new RLC entity needs to be established due to path adding; and
a configuration parameter of a media access control MAC entity corresponding to the DRB, where for a newly added link MAC, a MAC parameter can be configured simultaneously.

After control plane (Control Plane, CP) path change, the action that the layer 2 needs to perform includes at least one of the following:
whether a packet data convergence protocol PDCP entity corresponding to a signaling radio bearer SRB needs to be reestablished, where when a security parameter or another configuration parameter changes, PDCP establishment is required, otherwise, establishment is not required;
whether data recovery needs to be performed for the PDCP entity corresponding to the SRB, where when specified control needs to be performed on a receiving status of a peer end, PDCP data recovery can be performed, to trigger status reporting and retransmission, otherwise, data recovery is not required;
whether a new RLC entity corresponding to the SRB needs to be established, where a new RLC entity needs to be established and an old RLC entity needs to be deleted due to path (path) change; and
a configuration parameter of a MAC entity corresponding to the SRB, where for a newly added link MAC, a MAC parameter can be configured simultaneously, and for an old link MAC, a reset operation is generally not required due to presence of transmission of another DRB.

The action that the layer 2 (L2) needs to perform is mainly to deal with a possible change of the security parameter and necessary operations such as header compression and context reestablishment. Based on these changes, reestablishment or a reset operation of a layer related to L2 is used to ensure effective reset or continuity of a system frame number SN. Through an L2 status reporting and retransmission mechanism, the SN is used for reordering and duplicate detection operations. Finally, business continuity of the service can be maintained as much as possible, and a reliability indicator of the service, for example, a packet loss rate and a block error rate, can be improved.

Step a4: The first terminal sends a multi-path configuration complete message to the network-side device.

An existing message can be used to carry the multi-path configuration complete message, or a new multi-path configuration complete message can be defined. The existing message includes an RRC reconfiguration complete (reconfiguration complete) message.

In another specific embodiment, the first terminal has already established an RRC connection and a related user plane (UP) path with the network-side device through the indirect path. The network-side device can use the existing indirect path to establish the direct path with the first terminal.

Specifically, when remote UE or primary UE is at the edge of a cell or a link condition is poor, for example, a reference signal received power (RSRP) from the first UE to a serving cell is below a specified threshold, if the first UE needs to transmit data, the first UE can find appropriate relay UE or secondary UE (the second UE has good link quality assurance to the network side, for example, an RSRP of the second UE is higher than the specified threshold, optionally, a maximum RSRP threshold may be configured, and the RSRP of the second UE cannot exceed the maximum RSRP threshold, to avoid excessive interference when the second UE that is very close to the base station transfers data), establish an RRC connection to the serving cell through the relay UE or secondary UE, establish a DRB path, that is, establish an indirect CP+UP path, and can transmit control plane data and user plane data through the indirect path.

The path establishment method in this embodiment includes the following steps.

Step b 1: The network-side device determines whether a preset second path establishment condition is met, where the preset second path establishment condition specifically includes at least one of the following:
a size of a data buffer status report (BSR) of the first terminal is greater than or equal to a third threshold;
a service reliability requirement parameter of the first terminal is greater than or equal to a fourth threshold, where the service reliability requirement parameter is related to a packet loss rate and/or bit error rate, and the packet loss rate and/or bit error rate are inversely proportional to the service reliability requirement parameter;
a core network element requires a service to be transmitted through the second path or through the first path and the second path;
downlink data arrives;
link quality between the first terminal and a serving base station meets a communication condition, for example, an RSRP is greater than a specified threshold;
the first terminal is allowed to perform multi-path transmission; and
at least some services of the first terminal are allowed to be transmitted in a plurality of paths, where at least some services include one or more services of the first terminal.

Step b2: The network-side device sends first indication information to the first terminal, where the first indication information is used to indicate to establish the second path, and the first terminal receives the first indication information from the network-side device.

An existing message can be used to carry the first indication information, or one piece of new first indication information can be defined. The existing message includes an RRC reconfiguration with sync (RRC reconfiguration with sync) message.

The first terminal further receives at least one of the following information from the network-side device:
configuration information of the direct path between the first terminal and the network-side device, for example, a radio link control (RLC) bearer configuration, a mapping relationship between an RLC bearer and a UE DRB, a media access control (MAC) configuration, and a physical layer (PHY) configuration;
serving cell identification information of the first terminal;
second indication information, indicating an action that needs to be executed by a layer 2 after a path is added; and
a rule for transmitting user plane data through the first path and the second path.

After two paths (the indirect path and the direct path) are established, for a data bearer of the first terminal, how to transmit data in the two paths can be configured by the network-side device in a user plane data transmission rule. The rule may include any of the following:
a first part of a data radio bearer DRB of the first terminal is transmitted in only the direct path;
a second part of the DRB of the first terminal is transmitted in only the indirect path, where the second part of the DRB may be a DRB other than the first part of the DRB;
different parts of the DRB of the first terminal are transmitted in both the direct path and the indirect path, and different paths can be selected for different data packets according to a rule, for example, data packets with sequence numbers 1 to 5 are transmitted through the indirect path, and data packets with sequence numbers 6 to 10 are transmitted through the direct path, which can improve a transmission rate of the data packet; and
the DRB of the first terminal is transmitted in both the direct path and the indirect path after replication, that is, a same data packet can be replicated and then transmitted in the two paths, which can improve reliability of transmission of the data packet.

Further, when different parts of the DRB of the first terminal are transmitted in both the direct path and the indirect path, or when the DRB of the first terminal is transmitted in both the direct path and the indirect path after replication, the rule includes any one of the following:
the DRB is transmitted by default in the first path or the second path, namely, a main path and a preferred path for data packet transmission;
after a preset condition parameter, for example, a data volume threshold, a data waiting time threshold, a link quality threshold, and a link load threshold, is satisfied, the DRB is transmitted in both the direct path and the indirect path, in general, DRB data of the first UE is transmitted first in the primary path, and only after this condition is met, any path or another path can be selected for transmission, for example, if link quality of the primary path is lower than the link quality threshold and/or link quality of another path is higher than the link quality threshold, any path or other path can be selected for transmission; or only when a link load of a main path is higher than the link load threshold and/or a link load of another path is lower than the link load threshold, any path or other path can be selected for transmission;
the DRB is transmitted in both the direct path and the indirect path after duplication, a switch is configured for a DRB of each terminal, once the switch is configured or activated, all data packets of the DRB are replicated and then transmitted in the two paths, and when the switch is reconfigured or deactivated, the DRB data of the first UE is transmitted in the main path; and
duplication is performed or not performed on the DRB, the rule includes an initial state of a duplication (duplication) function, after the duplication function is enabled, the initial state can be configured an activated state or a deactivated state, a duplication operation can be performed based on this state, and subsequently, duplication activation or deactivation can be performed again through RRC, a MAC control element (CE), or L1 signaling.

In some embodiments, the main path may not be configured, so that any path can be selected for data, which is determined by the UE or based on path quality or a path load.

In the foregoing steps, the first indication information indicates an action that a layer 2 needs to perform after a path is added. After an UP path is added, the action that the layer 2 needs to perform includes at least one of the following:
whether a packet data convergence protocol PDCP entity corresponding to the DRB needs to be reestablished, where when a security parameter or another configuration parameter changes, PDCP establishment is required, otherwise, establishment is not required;
whether data recovery needs to be performed for the PDCP entity corresponding to the DRB, where when specified control needs to be performed on a receiving status of a peer end, PDCP data recovery can be performed, to trigger status reporting and retransmission, otherwise, data recovery is not required;
whether a new radio link control RLC entity corresponding to the DRB needs to be established, where a new RLC entity needs to be established due to path adding; and
a configuration parameter of a media access control MAC entity corresponding to the DRB, where for a newly added link MAC, a MAC parameter can be configured simultaneously.

After CP path change, the action that the layer 2 needs to perform includes at least one of the following:
whether a packet data convergence protocol PDCP entity corresponding to a signaling radio bearer SRB needs to be reestablished, where when a security parameter or another configuration parameter changes, PDCP establishment is required, otherwise, establishment is not required;
whether data recovery needs to be performed for the PDCP entity corresponding to the SRB, where when specified control needs to be performed on a receiving status of a peer end, PDCP data recovery can be performed, to trigger status reporting and retransmission, otherwise, data recovery is not required;
whether a new RLC entity corresponding to the SRB needs to be established, where a new RLC entity needs to be established and an old RLC entity needs to be deleted due to path change; and
a configuration parameter of a MAC entity corresponding to the SRB, where for a newly added link MAC, a MAC parameter can be configured simultaneously, and for an old link MAC, a reset operation is generally not required due to presence of transmission of another DRB.

The action that the layer 2 needs to perform is mainly to deal with a possible change of the security parameter and necessary operations such as header compression and context reestablishment. Based on these changes, reestablishment or a reset operation of a layer related to L2 is used to ensure effective reset or continuity of a system frame number SN. Through an L2 status reporting and retransmission mechanism, the SN is used for reordering and duplicate detection operations. Finally, business continuity of the service can be maintained as much as possible, and a reliability indicator of the service, for example, a packet loss rate and a block error rate, can be improved.

Step b3: The first terminal sends a multi-path configuration complete message to the network-side device, and the network-side device receives the multi-path configuration complete message sent by the first terminal.

An existing message can be used to carry the multi-path configuration complete message, or a new multi-path configuration complete message can be defined. The existing message includes an RRC reconfiguration complete message.

In another specific embodiment, the first terminal has already established an RRC connection and a related user plane (UP) path with the network-side device through the direct path. The first terminal can use the existing direct path to establish the indirect path with the network-side device.

Specifically, when remote UE or primary UE is in a cell or a link condition is good, for example, a reference signal received power (RSRP) from the first UE to a serving cell is not below a specified threshold, if the first UE needs to transmit data, the first UE can directly establish an RRC connection to the serving cell, establish a DRB path, that is, establish a direct CP+UP path, and can transmit control plane data and user plane data through the direct path.

The path establishment method in this embodiment includes the following steps.

Step c1: The first terminal determines whether the preset first path establishment condition is met, where the preset first path establishment condition specifically includes at least one of the following:
a data buffer size of the first terminal is greater than or equal to a first threshold;
a service reliability requirement parameter of the first terminal is greater than or equal to a second threshold;
an upper layer protocol of the first terminal requires a service to be transmitted through the second path or through the first path and the second path, where the upper layer protocol is an upper layer entity above an RRC layer in the first terminal;
a paging message is received from the network-side device;
link quality between the first terminal and the second terminal meets a communication condition, for example, an RSRP between two UEs is greater than a specified threshold;
the first terminal is allowed to perform multi-path transmission; and
at least some services of the first terminal are allowed to be transmitted in a plurality of paths, where at least some services include one or more services of the first terminal.

For a scenario in which downlink data arrives, it may be necessary to enhance a paging message (paging message) by sending the paging message to the first terminal, to indicate a path establishment method of the UE in the paging message, where the paging message carries at least one of the following information:
indicating the first terminal to establish the first path and/or the second path, that is, indicating the first terminal to establish a single path or a plurality of paths, and if a single path is established, indicating to establish the first path or the second path; and
when indicating the first terminal to establish a single path, indicating whether the established path is a direct path or an indirect path.

If the paging message is encoded with 1 bit, it can be distinguished as single path (either direct or indirect path), and multi-path (both direct and indirect path). If the paging message is encoded with 2 bits, it can be distinguished as single path (direct path only), single path (indirect path only), and multi-path (both direct and indirect path).

Step c2: When the first terminal determines that the preset first path establishment condition is met, the first terminal sends a first request (aggregation request) to the network-side device, to request to add the second path.

An existing message can be used to carry the first request, or a new first request can be defined. The existing message includes at least one of the following: UE assistance information (UAI), SUI, a measurement report (Measurement Report), a radio resource control setup complete (RRC Setup Complete) message, and a radio resource control resume complete (RRC Resume Complete) message.

Further, the first request further includes first information, and the first information includes at least one of the following:
signal quality between the first terminal and the second terminal;
identification information of the second terminal;
serving cell identification information of the second terminal;
signal quality between the second terminal and the network-side device; and
signal quality between the first terminal and the network-side device.

The first information is sent to the network-side device, to help the network-side device obtain related information about a to-be-established direct path.

Step c3: The first terminal receives first indication information from the network-side device, where the first indication information is used to indicate to establish the second path.

An existing message can be used to carry the first indication information, or one piece of new first indication information can be defined. The existing message includes an RRC reconfiguration with sync (reconfiguration with sync) message.

The first terminal further receives at least one of the following information from the network-side device:
configuration information of a link between the first terminal and the second terminal, for example, a radio link control (RLC) bearer configuration between the two terminals, a mapping relationship between an RLC bearer and a UE DRB, a media access control (MAC) configuration, and a physical layer (PHY) configuration between the two terminals;
serving cell identification information of the first terminal;
second indication information, indicating an action that needs to be executed by a layer 2 after a path is added; and
a rule for transmitting user plane data through the first path and the second path.

After two paths (the indirect path and the direct path) are established, for a data bearer of the first terminal, how to transmit data in the two paths can be configured by the network-side device in a user plane data transmission rule. The rule may include any of the following:
a first part of a data radio bearer DRB of the first terminal is transmitted in only the direct path;
a second part of the DRB of the first terminal is transmitted in only the indirect path, where the second part of the DRB may be a DRB other than the first part of the DRB;
different parts of the DRB of the first terminal are transmitted in both the direct path and the indirect path, and different paths can be selected for different data packets according to a rule, for example, data packets with sequence numbers 1 to 5 are transmitted through the indirect path, and data packets with sequence numbers 6 to 10 are transmitted through the direct path, which can improve a transmission rate of the data packet; and
the DRB of the first terminal is transmitted in both the direct path and the indirect path after replication, that is, a same data packet can be replicated and then transmitted in the two paths, which can improve reliability of transmission of the data packet.

Further, when different parts of the DRB of the first terminal are transmitted in both the direct path and the indirect path, or when the DRB of the first terminal is transmitted in both the direct path and the indirect path after replication, the rule includes any one of the following:
the DRB is transmitted by default in the first path or the second path, namely, a main path and a preferred path for data packet transmission;
after a preset condition parameter, for example, a data volume threshold, a data waiting time threshold, a link quality threshold, and a link load threshold, is satisfied, the DRB is transmitted in both the direct path and the indirect path, in general, DRB data of the first UE is transmitted first in the primary path, and only after this condition is met, any path or another path can be selected for transmission, for example, if link quality of the primary path is lower than the link quality threshold and/or link quality of another path is higher than the link quality threshold, any path or other path can be selected for transmission; or only when a link load of a main path is higher than the link load threshold and/or a link load of another path is lower than the link load threshold, any path or other path can be selected for transmission;
the DRB is transmitted in both the direct path and the indirect path after duplication, a switch is configured for a DRB of each terminal, once the switch is configured or activated, all data packets of the DRB are replicated and then transmitted in the two paths, and when the switch is reconfigured or deactivated, the DRB data of the first UE is transmitted in the main path; and
duplication is performed or not performed on the DRB, the rule includes an initial state of a duplication (duplication) function, after the duplication function is enabled, the initial state can be configured an activated state or a deactivated state, a duplication operation can be performed based on this state, and subsequently, duplication activation or deactivation can be performed again through RRC, a MAC control element (CE), or L1 signaling.

In some embodiments, the main path may not be configured, so that any path can be selected for data, which is determined by the UE or based on path quality or a path load.

In the foregoing steps, the first indication information indicates an action that a layer 2 needs to perform after a path is added. After an UP path is added, the action that the layer 2 needs to perform includes at least one of the following:
whether a packet data convergence protocol PDCP entity corresponding to the DRB needs to be reestablished, where when a security parameter or another configuration parameter changes, PDCP establishment is required, otherwise, establishment is not required;
whether data recovery needs to be performed for the PDCP entity corresponding to the DRB, where when specified control needs to be performed on a receiving status of a peer end, PDCP data recovery can be performed, to trigger status reporting and retransmission, otherwise, data recovery is not required;
whether a new radio link control RLC entity corresponding to the DRB needs to be established, where a new RLC entity needs to be established due to path adding; and
a configuration parameter of a media access control MAC entity corresponding to the DRB, where for a newly added link MAC, a MAC parameter can be configured simultaneously.

After CP path change, the action that the layer 2 needs to perform includes at least one of the following:
whether a packet data convergence protocol PDCP entity corresponding to a signaling radio bearer SRB needs to be reestablished, where when a security parameter or another configuration parameter changes, PDCP establishment is required, otherwise, establishment is not required;
whether data recovery needs to be performed for the PDCP entity corresponding to the SRB, where when specified control needs to be performed on a receiving status of a peer end, PDCP data recovery can be performed, to trigger status reporting and retransmission, otherwise, data recovery is not required;
whether a new RLC entity corresponding to the SRB needs to be established, where a new RLC entity needs to be established and an old RLC entity needs to be deleted due to path change; and
a configuration parameter of a MAC entity corresponding to the SRB, where for a newly added link MAC, a MAC parameter can be configured simultaneously, and for an old link MAC, a reset operation is generally not required due to presence of transmission of another DRB.

The action that the layer 2 needs to perform is mainly to deal with a possible change of the security parameter and necessary operations such as header compression and context reestablishment. Based on these changes, reestablishment or a reset operation of a layer related to L2 is used to ensure effective reset or continuity of a system frame number SN. Through an L2 status reporting and retransmission mechanism, the SN is used for reordering and duplicate detection operations. Finally, business continuity of the service can be maintained as much as possible, and a reliability indicator of the service, for example, a packet loss rate and a block error rate, can be improved.

Step c4: The first terminal sends a multi-path configuration complete message to the network-side device.

An existing message can be used to carry the multi-path configuration complete message, or a new multi-path configuration complete message can be defined. The existing message includes an RRC reconfiguration complete (reconfiguration complete) message.

In addition, before, after, or during Step c3, the network-side device can send a reconfiguration message to the second UE to increase a configuration of a bearer related to the second UE, and receive a complete message from the second UE. The method further includes:
The network-side device sends the reconfiguration message to the second terminal, where the reconfiguration message includes at least one of the following:
configuration information of a link between the first terminal and the second terminal, for example, a radio link control (RLC) bearer configuration between the two terminals, a mapping relationship between an RLC bearer and a first UE DRB, a media access control (MAC) configuration, and a physical layer (PHY) configuration between the two terminals;
new bearer configuration information added by the second terminal on the Uu interface, for example, the RLC bearer configuration of the Uu interface, the mapping relationship between the Uu RLC bearer and the first UE DRB, and the MAC/PHY configuration of the Uu interface; and
serving cell identification information of the first terminal.

In addition, in this embodiment, during a process of adding a plurality of paths, or before or after adding a plurality of paths, CP path change (change) is also performed for the first UE, that is, the direct path is changed to the indirect path. The method includes:
The first terminal receives a second message from the network-side device, where the second message includes third indication information, and the third indication information is used to indicate to change from the first path to the second path for transmitting control plane data. The second message may be carried through an existing RRC reconfiguration with sync message, or a new message may be defined.

The first terminal uses, based on the third indication information, the second path to transmit the control plane data.

The second message may include at least one of the following:
configuration information of a link between the first terminal and the second terminal, for example, a link RLC bearer configuration between the two UEs, a mapping relationship between an RLC bearer and a first UE SRB, a link MAC/PHY configuration between the two UEs;
fourth indication information, explicitly or implicitly indicating to delete a control surface path before change;
a safety parameter and information for changing the control surface path;
serving cell identification information of the second terminal; and
fifth indication information, indicating an action that needs to be executed by a layer 2 after a path is changed.

In still another specific embodiment, the first terminal has already established an RRC connection and a related user plane (UP) path with the network-side device through the direct path. The first terminal can use the existing direct path to establish the indirect path with the network-side device.

Specifically, when remote UE or primary UE is in a cell or a link condition is good, for example, a reference signal received power (RSRP) from the first UE to a serving cell is not below a specified threshold, if the first UE needs to transmit data, the first UE can directly establish an RRC connection to the serving cell, establish a DRB path, that is, establish a direct CP+UP path, and can transmit control plane data and user plane data through the direct path.

The path establishment method in this embodiment includes the following steps.

Step d1: The network-side device determines whether a preset second path establishment condition is met, where the preset second path establishment condition specifically includes at least one of the following:
a size of a data buffer status report (BSR) of the first terminal is greater than or equal to a third threshold;
a service reliability requirement parameter of the first terminal is greater than or equal to a fourth threshold;
a core network element requires a service to be transmitted through the second path or through the first path and the second path;
downlink data arrives;
a measurement report of the first terminal, indicating that potential link quality between the first terminal and the second terminal meets a communication condition, for example, an RSRP is greater than a specified threshold;
the first terminal is allowed to perform multi-path transmission; and
at least some services of the first terminal are allowed to be transmitted in a plurality of paths, where at least some services include one or more services of the first terminal.

Step d2: When the network-side device determines that a preset second path establishment condition is met, the network-side device sends first indication information to the first terminal, and the first terminal receives the first indication information from the network-side device, where the first indication information is used to indicate to establish the second path.

An existing message can be used to carry the first indication information, or one piece of new first indication information can be defined. The existing message includes an RRC reconfiguration with sync (reconfiguration with sync) message.

The first terminal further receives at least one of the following information from the network-side device:
configuration information of a link between the first terminal and the second terminal, for example, a radio link control (RLC) bearer configuration between the two terminals, a mapping relationship between an RLC bearer and a UE DRB, a media access control (MAC) configuration, and a physical layer (PHY) configuration between the two terminals;
serving cell identification information of the first terminal;
second indication information, indicating an action that needs to be executed by a layer 2 after a path is added; and
a rule for transmitting user plane data through the first path and the second path.

After two paths (the indirect path and the direct path) are established, for a data bearer of the first terminal, how to transmit data in the two paths can be configured by the network-side device in a user plane data transmission rule. The rule may include any of the following:
a first part of a data radio bearer DRB of the first terminal is transmitted in only the direct path;
a second part of the DRB of the first terminal is transmitted in only the indirect path, where the second part of the DRB may be a DRB other than the first part of the DRB;
different parts of the DRB of the first terminal are transmitted in both the direct path and the indirect path, and different paths can be selected for different data packets according to a rule, for example, data packets with sequence numbers 1 to 5 are transmitted through the indirect path, and data packets with sequence numbers 6 to 10 are transmitted through the direct path, which can improve a transmission rate of the data packet; and
the DRB of the first terminal is transmitted in both the direct path and the indirect path after replication, that is, a same data packet can be replicated and then transmitted in the two paths, which can improve reliability of transmission of the data packet.

Further, when different parts of the DRB of the first terminal are transmitted in both the direct path and the indirect path, or when the DRB of the first terminal is transmitted in both the direct path and the indirect path after replication, the rule includes any one of the following:
the DRB is transmitted by default in the first path or the second path, namely, a main path and a preferred path for data packet transmission;
after a preset condition parameter, for example, a data volume threshold, a data waiting time threshold, a link quality threshold, and a link load threshold, is satisfied, the DRB is transmitted in both the direct path and the indirect path, in general, DRB data of the first UE is transmitted first in the primary path, and only after this condition is met, any path or another path can be selected for transmission, for example, if link quality of the primary path is lower than the link quality threshold and/or link quality of another path is higher than the link quality threshold, any path or other path can be selected for transmission; or only when a link load of a main path is higher than the link load threshold and/or a link load of another path is lower than the link load threshold, any path or other path can be selected for transmission;
the DRB is transmitted in both the direct path and the indirect path after duplication, a switch is configured for a DRB of each terminal, once the switch is configured or activated, all data packets of the DRB are replicated and then transmitted in the two paths, and when the switch is reconfigured or deactivated, the DRB data of the first UE is transmitted in the main path; and
duplication is performed or not performed on the DRB, the rule includes an initial state of a duplication (duplication) function, after the duplication function is enabled, the initial state can be configured an activated state or a deactivated state, a duplication operation can be performed based on this state, and subsequently, duplication activation or deactivation can be performed again through RRC, a MAC control element (CE), or L1 signaling.

In some embodiments, the main path may not be configured, so that any path can be selected for data, which is determined by the UE or based on path quality or a path load.

In the foregoing steps, the first indication information indicates an action that a layer 2 needs to perform after a path is added. After an UP path is added, the action that the layer 2 needs to perform includes at least one of the following:
whether a packet data convergence protocol PDCP entity corresponding to the DRB needs to be reestablished, where when a security parameter or another configuration parameter changes, PDCP establishment is required, otherwise, establishment is not required;
whether data recovery needs to be performed for the PDCP entity corresponding to the DRB, where when specified control needs to be performed on a receiving status of a peer end, PDCP data recovery can be performed, to trigger status reporting and retransmission, otherwise, data recovery is not required;
whether a new radio link control RLC entity corresponding to the DRB needs to be established, where a new RLC entity needs to be established due to path adding; and
a configuration parameter of a media access control MAC entity corresponding to the DRB, where for a newly added link MAC, a MAC parameter can be configured simultaneously.

After CP path change, the action that the layer 2 needs to perform includes at least one of the following:
whether a packet data convergence protocol PDCP entity corresponding to a signaling radio bearer SRB needs to be reestablished, where when a security parameter or another configuration parameter changes, PDCP establishment is required, otherwise, establishment is not required;
whether data recovery needs to be performed for the PDCP entity corresponding to the SRB, where when specified control needs to be performed on a receiving status of a peer end, PDCP data recovery can be performed, to trigger status reporting and retransmission, otherwise, data recovery is not required;
whether a new RLC entity corresponding to the SRB needs to be established, where a new RLC entity needs to be established and an old RLC entity needs to be deleted due to path change; and
a configuration parameter of a MAC entity corresponding to the SRB, where for a newly added link MAC, a MAC parameter can be configured simultaneously, and for an old link MAC, a reset operation is generally not required due to presence of transmission of another DRB.

The action that the layer 2 needs to perform is mainly to deal with a possible change of the security parameter and necessary operations such as header compression and context reestablishment. Based on these changes, reestablishment or a reset operation of a layer related to L2 is used to ensure effective reset or continuity of a system frame number SN. Through an L2 status reporting and retransmission mechanism, the SN is used for reordering and duplicate detection operations. Finally, business continuity of the service can be maintained as much as possible, and a reliability indicator of the service, for example, a packet loss rate and a block error rate, can be improved.

Step d3: The first terminal sends a multi-path configuration complete message to the network-side device.

An existing message can be used to carry the multi-path configuration complete message, or a new multi-path configuration complete message can be defined. The existing message includes an RRC reconfiguration complete (reconfiguration complete) message.

In addition, before, after, or during Step d2, the network-side device can send a reconfiguration message to the second UE to increase a configuration of a bearer related to the second UE, and receive a complete message from the second UE. The method further includes:

The network-side device sends the reconfiguration message to the second terminal, where the reconfiguration message includes at least one of the following:
configuration information of a link between the first terminal and the second terminal, for example, a radio link control (RLC) bearer configuration between the two terminals, a mapping relationship between an RLC bearer and a first UE DRB, a media access control (MAC) configuration, and a physical layer (PHY) configuration between the two terminals;
new bearer configuration information added by the second terminal on the Uu interface, for example, the RLC bearer configuration of the Uu interface, the mapping relationship between the Uu RLC bearer and the first UE DRB, and the MAC/PHY configuration of the Uu interface; and
serving cell identification information of the first terminal.

In addition, in this embodiment, during a process of adding a plurality of paths, or before or after adding a plurality of paths, CP path change (change) is also performed for the first UE, that is, the direct path is changed to the indirect path. The method includes:

The first terminal receives a second message from the network-side device, where the second message includes third indication information, and the third indication information is used to indicate to change from the first path to the second path for transmitting control plane data. The second message may be carried through an existing RRC reconfiguration with sync message, or a new message may be defined.

The first terminal uses, based on the third indication information, the second path to transmit the control plane data.

The second message may include at least one of the following:
configuration information of a link between the first terminal and the second terminal, for example, a link RLC bearer configuration between the two UEs, a mapping relationship between an RLC bearer and a first UE SRB, a link MAC/PHY configuration between the two UEs;
fourth indication information, explicitly or implicitly indicating to delete a control surface path before change;
a safety parameter and information for changing the control surface path;
serving cell identification information of the second terminal; and
fifth indication information, indicating an action that needs to be executed by a layer 2 after a path is changed.

Specifically, when determining that a preset control plane path change condition is met, the network-side device can send a second message to the first terminal, where the control plane path change condition includes at least one of the following:
transmission of control plane data in the direct path of the first terminal cannot meet a transmission requirement, for example, an RSRP from the first terminal to the serving base station is less than a specified threshold;
the first terminal supports transmission of the control plane data in only one path; and
transmission of the control plane data in the indirect path of the first terminal can meet the transmission requirement, for example, an RSRP between the two UEs is greater than a specified threshold, and an RSRP of the Uu interface of the second UE is greater than a specified threshold, and the like.

An embodiment of this application further provides a path establishment method. As shown in FIG. 6, the method includes the following steps.

Step 201: When a first path is established, a network-side device establishes a second path with a first terminal.

The first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

In this embodiment of this application, a multi-path connection can be established between the first terminal and the network-side device. Different signaling and business data can be transmitted between the first terminal and the network-side device through a plurality of paths. This can improve a throughput of communication transmission. When link quality of one path is poor, another path with better link quality can be used to ensure reliability of transmission.

In this embodiment, the first terminal may be remote UE or primary UE, and the second terminal may be relay UE or secondary UE.

In some embodiments, the establishing a second path with a first terminal includes:

The network side device receives a first request sent by the first terminal, where the first request is used to request to establish the second path, and the first request is sent by the first terminal after determining that a preset first path establishment condition is met.

The first path establishment condition can be specified in a protocol, configured by the network-side device, or pre-configured by the network-side device.

In a specific embodiment, the first terminal has already established an RRC connection and a related user plane (UP) path with the network-side device through the indirect path. The first terminal can use the existing indirect path to establish the direct path with the network-side device.

Specifically, when remote UE or primary UE is at the edge of a cell or a link condition is poor, for example, a reference signal received power (RSRP) from the first UE to a serving cell is below a specified threshold, if the first UE needs to transmit data, the first UE can find appropriate relay UE or secondary UE (the second UE has good link quality assurance to the network side, for example, an RSRP of the second UE is higher than the specified threshold, optionally, a maximum RSRP threshold may be configured, and the RSRP of the second UE cannot exceed the maximum RSRP threshold, to avoid excessive interference when the second UE that is very close to the base station transfers data), establish an RRC connection to the serving cell through the relay UE or secondary UE, establish a DRB path, that is, establish an indirect CP+UP path, and can transmit control plane data and user plane data through the indirect path.

The path establishment method in this embodiment includes the following steps.

Step a1: The first terminal determines whether the preset first path establishment condition is met, where the preset first path establishment condition specifically includes at least one of the following:
a data buffer size of the first terminal is greater than or equal to a first threshold;
a service reliability requirement parameter of the first terminal is greater than or equal to a second threshold, where the service reliability requirement parameter is related to a packet loss rate and/or bit error rate, and the packet loss rate and/or bit error rate are inversely proportional to the service reliability requirement parameter;
an upper layer protocol of the first terminal requires a service to be transmitted through the second path or through the first path and the second path, where the upper layer protocol is an upper layer entity above an RRC layer in the first terminal;
a paging message is received from the network-side device;
link quality between the first terminal and a serving base station meets a communication condition, for example, an RSRP is greater than a specified threshold;
the first terminal is allowed to perform multi-path transmission; and
at least some services of the first terminal are allowed to be transmitted in a plurality of paths, where at least some services include one or more services of the first terminal.

For a scenario in which downlink data arrives, it may be necessary to enhance a paging message (paging message) by sending the paging message to the first terminal, to indicate a path establishment method of the UE in the paging message, where the paging message carries at least one of the following information:
indicating the first terminal to establish the first path and/or the second path, that is, indicating the first terminal to establish a single path or a plurality of paths, and if a single path is established, indicating to establish the first path or the second path; and
when indicating the first terminal to establish a single path, indicating whether the established path is a direct path or an indirect path.

If the paging message is encoded with 1 bit, it can be distinguished as single path (either direct or indirect path), and multi-path (both direct and indirect path). If the paging message is encoded with 2 bits, it can be distinguished as single path (direct path only), single path (indirect path only), and multi-path (both direct and indirect path).

Step a2: When the first terminal determines that the preset first path establishment condition is met, the first terminal sends a first request (aggregation request) to the network-side device, to request to add the second path.

An existing message can be used to carry the first request, or a new first request can be defined. The existing message includes at least one of the following: UE assistance information (UAI), SUI, a measurement report (Measurement Report), a radio resource control setup complete (RRC Setup Complete) message, and a radio resource control resume complete (RRC Resume Complete) message.

Further, the first request further includes first information, and the first information includes at least one of the following:
signal quality between the first terminal and the second terminal;
identification information of the second terminal;
serving cell identification information of the second terminal;
signal quality between the second terminal and the network-side device; and
signal quality between the first terminal and the network-side device.

The first information is sent to the network-side device, to help the network-side device obtain related information about a to-be-established direct path.

Step a3: The first terminal receives first indication information from the network-side device, where the first indication information is used to indicate to establish the second path.

An existing message can be used to carry the first indication information, or one piece of new first indication information can be defined. The existing message includes an RRC reconfiguration with sync (reconfiguration with sync) message.

The first terminal further receives at least one of the following information from the network-side device:
configuration information of the direct path between the first terminal and the network-side device, for example, a radio link control (RLC) bearer configuration, a mapping relationship between an RLC bearer and a UE DRB, a media access control (MAC) configuration, and a physical layer (PHY) configuration;
serving cell identification information of the first terminal;
second indication information, indicating an action that needs to be executed by a layer 2 after a path is added; and
a rule for transmitting user plane data through the first path and the second path.

After two paths (the indirect path and the direct path) are established, for a data bearer of the first terminal, how to transmit data in the two paths can be configured by the network-side device in a user plane data transmission rule. The rule may include any of the following:
a first part of a data radio bearer DRB of the first terminal is transmitted in only the direct path;
a second part of the DRB of the first terminal is transmitted in only the indirect path, where the second part of the DRB may be a DRB other than the first part of the DRB;
different parts of the DRB of the first terminal are transmitted in both the direct path and the indirect path, and different paths can be selected for different data packets according to a rule, for example, data packets with sequence numbers 1 to 5 are transmitted through the indirect path, and data packets with sequence numbers 6 to 10 are transmitted through the direct path, which can improve a transmission rate of the data packet; and
the DRB of the first terminal is transmitted in both the direct path and the indirect path after replication, that is, a same data packet can be replicated and then transmitted in the two paths, which can improve reliability of transmission of the data packet.

Further, when different parts of the DRB of the first terminal are transmitted in both the direct path and the indirect path, or when the DRB of the first terminal is transmitted in both the direct path and the indirect path after replication, the rule includes any one of the following:
the DRB is transmitted by default in the first path or the second path, where the first path or the second path is a main path and a preferred path for data packet transmission;
after a preset condition parameter, for example, a data volume threshold, a data waiting time threshold, a link quality threshold, and a link load threshold, is satisfied, the DRB is transmitted in both the direct path and the indirect path, in general, DRB data of the first UE is transmitted first in the primary path, and only after this condition is met, any path or another path can be selected for transmission, for example, if link quality of the primary path is lower than the link quality threshold and/or link quality of another path is higher than the link quality threshold, any path or other path can be selected for transmission; or only when a link load of a main path is higher than the link load threshold and/or a link load of another path is lower than the link load threshold, any path or other path can be selected for transmission;
the DRB is transmitted in both the direct path and the indirect path after duplication, a switch is configured for a DRB of each terminal, once the switch is configured or activated, all data packets of the DRB are replicated and then transmitted in the two paths, and when the switch is reconfigured or deactivated, the DRB data of the first UE is transmitted in the main path; and
duplication is performed or not performed on the DRB, the rule includes an initial state of a duplication (duplication) function, after the duplication function is enabled, the initial state can be configured an activated state or a deactivated state, a duplication operation can be performed based on this state, and subsequently, duplication activation or deactivation can be performed again through RRC, a MAC control element (CE), or L1 signaling.

In some embodiments, the main path may not be configured, so that any path can be selected for data, which is determined by the UE or based on path quality or a path load.

In the foregoing steps, the first indication information indicates an action that a layer 2 needs to perform after a path is added. After an UP path is added, the action that the layer 2 needs to perform includes at least one of the following:
whether a packet data convergence protocol PDCP entity corresponding to the DRB needs to be reestablished, where when a security parameter or another configuration parameter changes, PDCP establishment is required, otherwise, establishment is not required;
whether data recovery needs to be performed for the PDCP entity corresponding to the DRB, where when specified control needs to be performed on a receiving status of a peer end, PDCP data recovery can be performed, to trigger status reporting and retransmission, otherwise, data recovery is not required;
whether a new radio link control RLC entity corresponding to the DRB needs to be established, where a new RLC entity needs to be established due to path adding; and
a configuration parameter of a media access control MAC entity corresponding to the DRB, where for a newly added link MAC, a MAC parameter can be configured simultaneously.

After CP path change, the action that the layer 2 needs to perform includes at least one of the following:
whether a packet data convergence protocol PDCP entity corresponding to a signaling radio bearer SRB needs to be reestablished, where when a security parameter or another configuration parameter changes, PDCP establishment is required, otherwise, establishment is not required;
whether data recovery needs to be performed for the PDCP entity corresponding to the SRB, where when specified control needs to be performed on a receiving status of a peer end, PDCP data recovery can be performed, to trigger status reporting and retransmission, otherwise, data recovery is not required;
whether a new RLC entity corresponding to the SRB needs to be established, where a new RLC entity needs to be established and an old RLC entity needs to be deleted due to path change; and
a configuration parameter of a MAC entity corresponding to the SRB, where for a newly added link MAC, a MAC parameter can be configured simultaneously, and for an old link MAC, a reset operation is generally not required due to presence of transmission of another DRB.

Step a4: The first terminal sends a multi-path configuration complete message to the network-side device.

An existing message can be used to carry the multi-path configuration complete message, or a new multi-path configuration complete message can be defined. The existing message includes an RRC reconfiguration complete (reconfiguration complete) message.

In another specific embodiment, the first terminal has already established an RRC connection and a related user plane (UP) path with the network-side device through the indirect path. The network-side device can use the existing indirect path to establish the direct path with the first terminal.

Specifically, when remote UE or primary UE is at the edge of a cell or a link condition is poor, for example, a reference signal received power (RSRP) from the first UE to a serving cell is below a specified threshold, if the first UE needs to transmit data, the first UE can find appropriate relay UE or secondary UE (the second UE has good link quality assurance to the network side, for example, an RSRP of the second UE is higher than the specified threshold, optionally, a maximum RSRP threshold may be configured, and the RSRP of the second UE cannot exceed the maximum RSRP threshold, to avoid excessive interference when the second UE that is very close to the base station transfers data), establish an RRC connection to the serving cell through the relay UE or secondary UE, establish a DRB path, that is, establish an indirect CP+UP path, and can transmit control plane data and user plane data through the indirect path.

The path establishment method in this embodiment includes the following steps.

Step b1: The network-side device determines whether a preset second path establishment condition is met, where the preset second path establishment condition specifically includes at least one of the following:
a size of a data buffer status report (BSR) of the first terminal is greater than or equal to a third threshold;
a service reliability requirement parameter of the first terminal is greater than or equal to a fourth threshold, where the service reliability requirement parameter is related to a packet loss rate and/or bit error rate, and the packet loss rate and/or bit error rate are inversely proportional to the service reliability requirement parameter;
a core network element requires a service to be transmitted through the second path or through the first path and the second path;
downlink data arrives;
link quality between the first terminal and a serving base station meets a communication condition, for example, an RSRP is greater than a specified threshold;
the first terminal is allowed to perform multi-path transmission; and
at least some services of the first terminal are allowed to be transmitted in a plurality of paths, where at least some services include one or more services of the first terminal.

Step b2: The network-side device sends first indication information to the first terminal, where the first indication information is used to indicate to establish the second path, and the first terminal receives the first indication information from the network-side device.

An existing message can be used to carry the first indication information, or one piece of new first indication information can be defined. The existing message includes an RRC reconfiguration with sync message.

The first terminal further receives at least one of the following information from the network-side device:
configuration information of the direct path between the first terminal and the network-side device, for example, a radio link control (RLC) bearer configuration, a mapping relationship between an RLC bearer and a UE DRB, a media access control (MAC) configuration, and a physical layer (PHY) configuration;
serving cell identification information of the first terminal;
second indication information, indicating an action that needs to be executed by a layer 2 after a path is added; and
a rule for transmitting user plane data through the first path and the second path.

After two paths (the indirect path and the direct path) are established, for a data bearer of the first terminal, how to transmit data in the two paths can be configured by the network-side device in a user plane data transmission rule. The rule may include any of the following:
a first part of a data radio bearer DRB of the first terminal is transmitted in only the direct path;
a second part of the DRB of the first terminal is transmitted in only the indirect path, where the second part of the DRB may be a DRB other than the first part of the DRB;
different parts of the DRB of the first terminal are transmitted in both the direct path and the indirect path, and different paths can be selected for different data packets according to a rule, for example, data packets with sequence numbers 1 to 5 are transmitted through the indirect path, and data packets with sequence numbers 6 to 10 are transmitted through the direct path, which can improve a transmission rate of the data packet; and
the DRB of the first terminal is transmitted in both the direct path and the indirect path after replication, that is, a same data packet can be replicated and then transmitted in the two paths, which can improve reliability of transmission of the data packet.

Further, when different parts of the DRB of the first terminal are transmitted in both the direct path and the indirect path, or when the DRB of the first terminal is transmitted in both the direct path and the indirect path after replication, the rule includes any one of the following:
the DRB is transmitted by default in the first path or the second path, namely, a main path and a preferred path for data packet transmission;
after a preset condition parameter, for example, a data volume threshold, a data waiting time threshold, a link quality threshold, and a link load threshold, is satisfied, the DRB is transmitted in both the direct path and the indirect path, in general, DRB data of the first UE is transmitted first in the primary path, and only after this condition is met, any path or another path can be selected for transmission, for example, if link quality of the primary path is lower than the link quality threshold and/or link quality of another path is higher than the link quality threshold, any path or other path can be selected for transmission; or only when a link load of a main path is higher than the link load threshold and/or a link load of another path is lower than the link load threshold, any path or other path can be selected for transmission;
the DRB is transmitted in both the direct path and the indirect path after duplication, a switch is configured for a DRB of each terminal, once the switch is configured or activated, all data packets of the DRB are replicated and then transmitted in the two paths, and when the switch is reconfigured or deactivated, the DRB data of the first UE is transmitted in the main path; and
duplication is performed or not performed on the DRB, the rule includes an initial state of a duplication (duplication) function, after the duplication function is enabled, the initial state can be configured an activated state or a deactivated state, a duplication operation can be performed based on this state, and subsequently, duplication activation or deactivation can be performed again through RRC, a MAC control element (CE), or L1 signaling.

In some embodiments, the main path may not be configured, so that any path can be selected for data, which is determined by the UE or based on path quality or a path load.

In the foregoing steps, the first indication information indicates an action that a layer 2 needs to perform after a path is added. After an UP path is added, the action that the layer 2 needs to perform includes at least one of the following:
whether a packet data convergence protocol PDCP entity corresponding to the DRB needs to be reestablished, where when a security parameter or another configuration parameter changes, PDCP establishment is required, otherwise, establishment is not required;
whether data recovery needs to be performed for the PDCP entity corresponding to the DRB, where when specified control needs to be performed on a receiving status of a peer end, PDCP data recovery can be performed, to trigger status reporting and retransmission, otherwise, data recovery is not required;
whether a new radio link control RLC entity corresponding to the DRB needs to be established, where a new RLC entity needs to be established due to path adding; and
a configuration parameter of a media access control MAC entity corresponding to the DRB, where for a newly added link MAC, a MAC parameter can be configured simultaneously.

After CP path change, the action that the layer 2 needs to perform includes at least one of the following:
whether a packet data convergence protocol PDCP entity corresponding to a signaling radio bearer SRB needs to be reestablished, where when a security parameter or another configuration parameter changes, PDCP establishment is required, otherwise, establishment is not required;
whether data recovery needs to be performed for the PDCP entity corresponding to the SRB, where when specified control needs to be performed on a receiving status of a peer end, PDCP data recovery can be performed, to trigger status reporting and retransmission, otherwise, data recovery is not required;
whether a new RLC entity corresponding to the SRB needs to be established, where a new RLC entity needs to be established and an old RLC entity needs to be deleted due to path change; and
a configuration parameter of a MAC entity corresponding to the SRB, where for a newly added link MAC, a MAC parameter can be configured simultaneously, and for an old link MAC, a reset operation is generally not required due to presence of transmission of another DRB.

Step b3: The first terminal sends a multi-path configuration complete message to the network-side device, and the network-side device receives the multi-path configuration complete message sent by the first terminal.

An existing message can be used to carry the multi-path configuration complete message, or a new multi-path configuration complete message can be defined. The existing message includes an RRC reconfiguration complete message.

In another specific embodiment, the first terminal has already established an RRC connection and a related user plane (UP) path with the network-side device through the direct path. The first terminal can use the existing direct path to establish the indirect path with the network-side device.

Specifically, when remote UE or primary UE is in a cell or a link condition is good, for example, a reference signal received power (RSRP) from the first UE to a serving cell is not below a specified threshold, if the first UE needs to transmit data, the first UE can directly establish an RRC connection to the serving cell, establish a DRB path, that is, establish a direct CP+UP path, and can transmit control plane data and user plane data through the direct path.

The path establishment method in this embodiment includes the following steps.

Step c1: The first terminal determines whether the preset first path establishment condition is met, where the preset first path establishment condition specifically includes at least one of the following:
a data buffer size of the first terminal is greater than or equal to a first threshold;
a service reliability requirement parameter of the first terminal is greater than or equal to a second threshold;
an upper layer protocol of the first terminal requires a service to be transmitted through the second path or through the first path and the second path, where the upper layer protocol is an upper layer entity above an RRC layer in the first terminal;
a paging message is received from the network-side device;
link quality between the first terminal and the second terminal meets a communication condition, for example, an RSRP between two UEs is greater than a specified threshold;
the first terminal is allowed to perform multi-path transmission; and
at least some services of the first terminal are allowed to be transmitted in a plurality of paths, where at least some services include one or more services of the first terminal.

For a scenario in which downlink data arrives, it may be necessary to enhance a paging message (paging message) by sending the paging message to the first terminal, to indicate a path establishment method of the UE in the paging message, where the paging message carries at least one of the following information:
indicating the first terminal to establish the first path and/or the second path, that is, indicating the first terminal to establish a single path or a plurality of paths, and if a single path is established, indicating to establish the first path or the second path; and
when indicating the first terminal to establish a single path, indicating whether the established path is a direct path or an indirect path.

If the paging message is encoded with 1 bit, it can be distinguished as single path (either direct or indirect path), and multi-path (both direct and indirect path). If the paging message is encoded with 2 bits, it can be distinguished as single path (direct path only), single path (indirect path only), and multi-path (both direct and indirect path).

Step c2: When the first terminal determines that the preset first path establishment condition is met, the first terminal sends a first request (aggregation request) to the network-side device, to request to add the second path.

An existing message can be used to carry the first request, or a new first request can be defined. The existing message includes at least one of the following: UE assistance information (UAI), SUI, a measurement report (Measurement Report), a radio resource control setup complete (RRC Setup Complete) message, and a radio resource control resume complete (RRC Resume Complete) message.

Further, the first request further includes first information, and the first information includes at least one of the following:
signal quality between the first terminal and the second terminal;
identification information of the second terminal;
serving cell identification information of the second terminal;
signal quality between the second terminal and the network-side device; and
signal quality between the first terminal and the network-side device.

The first information is sent to the network-side device, to help the network-side device obtain related information about a to-be-established direct path.

Step c3: The first terminal receives first indication information from the network-side device, where the first indication information is used to indicate to establish the second path.

An existing message can be used to carry the first indication information, or one piece of new first indication information can be defined. The existing message includes an RRC reconfiguration with sync (reconfiguration with sync) message.

The first terminal further receives at least one of the following information from the network-side device:
configuration information of a link between the first terminal and the second terminal, for example, a radio link control (RLC) bearer configuration between the two terminals, a mapping relationship between an RLC bearer and a UE DRB, a media access control (MAC) configuration, and a physical layer (PHY) configuration between the two terminals;
serving cell identification information of the first terminal;
second indication information, indicating an action that needs to be executed by a layer 2 after a path is added; and
a rule for transmitting user plane data through the first path and the second path.

After two paths (the indirect path and the direct path) are established, for a data bearer of the first terminal, how to transmit data in the two paths can be configured by the network-side device in a user plane data transmission rule. The rule may include any of the following:
a first part of a data radio bearer DRB of the first terminal is transmitted in only the direct path;
a second part of the DRB of the first terminal is transmitted in only the indirect path, where the second part of the DRB may be a DRB other than the first part of the DRB;
different parts of the DRB of the first terminal are transmitted in both the direct path and the indirect path, and different paths can be selected for different data packets according to a rule, for example, data packets with sequence numbers 1 to 5 are transmitted through the indirect path, and data packets with sequence numbers 6 to 10 are transmitted through the direct path, which can improve a transmission rate of the data packet; and
the DRB of the first terminal is transmitted in both the direct path and the indirect path after replication, that is, a same data packet can be replicated and then transmitted in the two paths, which can improve reliability of transmission of the data packet.

Further, when different parts of the DRB of the first terminal are transmitted in both the direct path and the indirect path, or when the DRB of the first terminal is transmitted in both the direct path and the indirect path after replication, the rule includes any one of the following:
the DRB is transmitted by default in the first path or the second path, namely, a main path and a preferred path for data packet transmission;
after a preset condition parameter, for example, a data volume threshold, a data waiting time threshold, a link quality threshold, and a link load threshold, is satisfied, the DRB is transmitted in both the direct path and the indirect path, in general, DRB data of the first UE is transmitted first in the primary path, and only after this condition is met, any path or another path can be selected for transmission, for example, if link quality of the primary path is lower than the link quality threshold and/or link quality of another path is higher than the link quality threshold, any path or other path can be selected for transmission; or only when a link load of a main path is higher than the link load threshold and/or a link load of another path is lower than the link load threshold, any path or other path can be selected for transmission;
the DRB is transmitted in both the direct path and the indirect path after duplication, a switch is configured for a DRB of each terminal, once the switch is configured or activated, all data packets of the DRB are replicated and then transmitted in the two paths, and when the switch is reconfigured or deactivated, the DRB data of the first UE is transmitted in the main path; and
duplication is performed or not performed on the DRB, the rule includes an initial state of a duplication (duplication) function, after the duplication function is enabled, the initial state can be configured an activated state or a deactivated state, a duplication operation can be performed based on this state, and subsequently, duplication activation or deactivation can be performed again through RRC, a MAC control element (CE), or L1 signaling.

In some embodiments, the main path may not be configured, so that any path can be selected for data, which is determined by the UE or based on path quality or a path load.

In the foregoing steps, the first indication information indicates an action that a layer 2 needs to perform after a path is added. After an UP path is added, the action that the layer 2 needs to perform includes at least one of the following:
whether a packet data convergence protocol PDCP entity corresponding to the DRB needs to be reestablished, where when a security parameter or another configuration parameter changes, PDCP establishment is required, otherwise, establishment is not required;
whether data recovery needs to be performed for the PDCP entity corresponding to the DRB, where when specified control needs to be performed on a receiving status of a peer end, PDCP data recovery can be performed, to trigger status reporting and retransmission, otherwise, data recovery is not required;
whether a new radio link control RLC entity corresponding to the DRB needs to be established, where a new RLC entity needs to be established due to path adding; and
a configuration parameter of a media access control MAC entity corresponding to the DRB, where for a newly added link MAC, a MAC parameter can be configured simultaneously.

After CP path change, the action that the layer 2 needs to perform includes at least one of the following:
whether a packet data convergence protocol PDCP entity corresponding to a signaling radio bearer SRB needs to be reestablished, where when a security parameter or another configuration parameter changes, PDCP establishment is required, otherwise, establishment is not required;
whether data recovery needs to be performed for the PDCP entity corresponding to the SRB, where when specified control needs to be performed on a receiving status of a peer end, PDCP data recovery can be performed, to trigger status reporting and retransmission, otherwise, data recovery is not required;
whether a new RLC entity corresponding to the SRB needs to be established, where a new RLC entity needs to be established and an old RLC entity needs to be deleted due to path change; and
a configuration parameter of a MAC entity corresponding to the SRB, where for a newly added link MAC, a MAC parameter can be configured simultaneously, and for an old link MAC, a reset operation is generally not required due to presence of transmission of another DRB.

Step c4: The first terminal sends a multi-path configuration complete message to the network-side device.

An existing message can be used to carry the multi-path configuration complete message, or a new multi-path configuration complete message can be defined. The existing message includes an RRC reconfiguration complete (reconfiguration complete) message.

In addition, before, after, or during Step c3, the network-side device can send a reconfiguration message to the second UE to increase a configuration of a bearer related to the second UE, and receive a complete message from the second UE. The method further includes:
The network-side device sends the reconfiguration message to the second terminal, where the reconfiguration message includes at least one of the following:
configuration information of a link between the first terminal and the second terminal, for example, a radio link control (RLC) bearer configuration between the two terminals, a mapping relationship between an RLC bearer and a first UE DRB, a media access control (MAC) configuration, and a physical layer (PHY) configuration between the two terminals;
new bearer configuration information added by the second terminal on the Uu interface, for example, the RLC bearer configuration of the Uu interface, the mapping relationship between the Uu RLC bearer and the first UE DRB, and the MAC/PHY configuration of the Uu interface; and
serving cell identification information of the first terminal.

In addition, in this embodiment, during a process of adding a plurality of paths, or before or after adding a plurality of paths, CP path change (change) is also performed for the first UE, that is, the direct path is changed to the indirect path. The method includes:

The first terminal receives a second message from the network-side device, where the second message includes third indication information, and the third indication information is used to indicate to change from the first path to the second path for transmitting control plane data. The second message may be carried through an existing RRC reconfiguration with sync message, or a new message may be defined.

The first terminal uses, based on the third indication information, the second path to transmit the control plane data.

The second message may include at least one of the following:
configuration information of a link between the first terminal and the second terminal, for example, a link RLC bearer configuration between the two UEs, a mapping relationship between an RLC bearer and a first UE SRB, a link MAC/PHY configuration between the two UEs;
fourth indication information, explicitly or implicitly indicating to delete a control surface path before change;
a safety parameter and information for changing the control surface path;
serving cell identification information of the second terminal; and
fifth indication information, indicating an action that needs to be executed by a layer 2 after a path is changed.

In still another specific embodiment, the first terminal has already established an RRC connection and a related user plane (UP) path with the network-side device through the direct path. The first terminal can use the existing direct path to establish the indirect path with the network-side device.

Specifically, when remote UE or primary UE is in a cell or a link condition is good, for example, a reference signal received power (RSRP) from the first UE to a serving cell is not below a specified threshold, if the first UE needs to transmit data, the first UE can directly establish an RRC connection to the serving cell, establish a DRB path, that is, establish a direct CP+UP path, and can transmit control plane data and user plane data through the direct path.

The path establishment method in this embodiment includes the following steps.

Step d1: The network-side device determines whether a preset second path establishment condition is met, where the preset second path establishment condition specifically includes at least one of the following:
a size of a data buffer status report (BSR) of the first terminal is greater than or equal to a third threshold;
a service reliability requirement parameter of the first terminal is greater than or equal to a fourth threshold;
a core network element requires a service to be transmitted through the second path or through the first path and the second path;
downlink data arrives;
a measurement report of the first terminal, indicating that potential link quality between the first terminal and the second terminal meets a communication condition, for example, an RSRP is greater than a specified threshold;
the first terminal is allowed to perform multi-path transmission; and
at least some services of the first terminal are allowed to be transmitted in a plurality of paths, where at least some services include one or more services of the first terminal.

Step d2: When the network-side device determines that a preset second path establishment condition is met, the network-side device sends first indication information to the first terminal, and the first terminal receives the first indication information from the network-side device, where the first indication information is used to indicate to establish the second path.

An existing message can be used to carry the first indication information, or one piece of new first indication information can be defined. The existing message includes an RRC reconfiguration with sync (reconfiguration with sync) message.

The first terminal further receives at least one of the following information from the network-side device:
configuration information of a link between the first terminal and the second terminal, for example, a radio link control (RLC) bearer configuration between the two terminals, a mapping relationship between an RLC bearer and a UE DRB, a media access control (MAC) configuration, and a physical layer (PHY) configuration between the two terminals;
serving cell identification information of the first terminal;
second indication information, indicating an action that needs to be executed by a layer 2 after a path is added; and
a rule for transmitting user plane data through the first path and the second path.

After two paths (the indirect path and the direct path) are established, for a data bearer of the first terminal, how to transmit data in the two paths can be configured by the network-side device in a user plane data transmission rule. The rule may include any of the following:
a first part of a data radio bearer DRB of the first terminal is transmitted in only the direct path;
a second part of the DRB of the first terminal is transmitted in only the indirect path, where the second part of the DRB may be a DRB other than the first part of the DRB;
different parts of the DRB of the first terminal are transmitted in both the direct path and the indirect path, and different paths can be selected for different data packets according to a rule, for example, data packets with sequence numbers 1 to 5 are transmitted through the indirect path, and data packets with sequence numbers 6 to 10 are transmitted through the direct path, which can improve a transmission rate of the data packet; and
the DRB of the first terminal is transmitted in both the direct path and the indirect path after replication, that is, a same data packet can be replicated and then transmitted in the two paths, which can improve reliability of transmission of the data packet.

Further, when different parts of the DRB of the first terminal are transmitted in both the direct path and the indirect path, or when the DRB of the first terminal is transmitted in both the direct path and the indirect path after replication, the rule includes any one of the following:
the DRB is transmitted by default in the first path or the second path, namely, a main path and a preferred path for data packet transmission;
after a preset condition parameter, for example, a data volume threshold, a data waiting time threshold, a link quality threshold, and a link load threshold, is satisfied, the DRB is transmitted in both the direct path and the indirect path, in general, DRB data of the first UE is transmitted first in the primary path, and only after this condition is met, any path or another path can be selected for transmission, for example, if link quality of the primary path is lower than the link quality threshold and/or link quality of another path is higher than the link quality threshold, any path or other path can be selected for transmission; or only when a link load of a main path is higher than the link load threshold and/or a link load of another path is lower than the link load threshold, any path or other path can be selected for transmission;
the DRB is transmitted in both the direct path and the indirect path after duplication, a switch is configured for a DRB of each terminal, once the switch is configured or activated, all data packets of the DRB are replicated and then transmitted in the two paths, and when the switch is reconfigured or deactivated, the DRB data of the first UE is transmitted in the main path; and
duplication is performed or not performed on the DRB, the rule includes an initial state of a duplication (duplication) function, after the duplication function is enabled, the initial state can be configured an activated state or a deactivated state, a duplication operation can be performed based on this state, and subsequently, duplication activation or deactivation can be performed again through RRC, a MAC control element (CE), or L1 signaling.

In some embodiments, the main path may not be configured, so that any path can be selected for data, which is determined by the UE or based on path quality or a path load.

In the foregoing steps, the first indication information indicates an action that a layer 2 needs to perform after a path is added. After an UP path is added, the action that the layer 2 needs to perform includes at least one of the following:
whether a packet data convergence protocol PDCP entity corresponding to the DRB needs to be reestablished, where when a security parameter or another configuration parameter changes, PDCP establishment is required, otherwise, establishment is not required;
whether data recovery needs to be performed for the PDCP entity corresponding to the DRB, where when specified control needs to be performed on a receiving status of a peer end, PDCP data recovery can be performed, to trigger status reporting and retransmission, otherwise, data recovery is not required;
whether a new radio link control RLC entity corresponding to the DRB needs to be established, where a new RLC entity needs to be established due to path adding; and
a configuration parameter of a media access control MAC entity corresponding to the DRB, where for a newly added link MAC, a MAC parameter can be configured simultaneously.

After CP path change, the action that the layer 2 needs to perform includes at least one of the following:
whether a packet data convergence protocol PDCP entity corresponding to a signaling radio bearer SRB needs to be reestablished, where when a security parameter or another configuration parameter changes, PDCP establishment is required, otherwise, establishment is not required;
whether data recovery needs to be performed for the PDCP entity corresponding to the SRB, where when specified control needs to be performed on a receiving status of a peer end, PDCP data recovery can be performed, to trigger status reporting and retransmission, otherwise, data recovery is not required;
whether a new RLC entity corresponding to the SRB needs to be established, where a new RLC entity needs to be established and an old RLC entity needs to be deleted due to path change; and
a configuration parameter of a MAC entity corresponding to the SRB, where for a newly added link MAC, a MAC parameter can be configured simultaneously, and for an old link MAC, a reset operation is generally not required due to presence of transmission of another DRB.

Step d3: The first terminal sends a multi-path configuration complete message to the network-side device.

An existing message can be used to carry the multi-path configuration complete message, or a new multi-path configuration complete message can be defined. The existing message includes an RRC reconfiguration complete (reconfiguration complete) message.

In addition, before, after, or during Step d2, the network-side device can send a reconfiguration message to the second UE to increase a configuration of a bearer related to the second UE, and receive a complete message from the second UE. The method further includes:

The network-side device sends the reconfiguration message to the second terminal, where the reconfiguration message includes at least one of the following:
configuration information of a link between the first terminal and the second terminal, for example, a radio link control (RLC) bearer configuration between the two terminals, a mapping relationship between an RLC bearer and a first UE DRB, a media access control (MAC) configuration, and a physical layer (PHY) configuration between the two terminals;
new bearer configuration information added by the second terminal on the Uu interface, for example, the RLC bearer configuration of the Uu interface, the mapping relationship between the Uu RLC bearer and the first UE DRB, and the MAC/PHY configuration of the Uu interface; and
serving cell identification information of the first terminal.

In addition, in this embodiment, during a process of adding a plurality of paths, or before or after adding a plurality of paths, CP path change (change) is also performed for the first UE, that is, the direct path is changed to the indirect path. The method includes:

The first terminal receives a second message from the network-side device, where the second message includes third indication information, and the third indication information is used to indicate to change from the first path to the second path for transmitting control plane data. The second message may be carried through an existing RRC reconfiguration with sync message, or a new message may be defined.

The first terminal uses, based on the third indication information, the second path to transmit the control plane data.

The second message may include at least one of the following:
configuration information of a link between the first terminal and the second terminal, for example, a link RLC bearer configuration between the two UEs, a mapping relationship between an RLC bearer and a first UE SRB, a link MAC/PHY configuration between the two UEs;
fourth indication information, explicitly or implicitly indicating to delete a control surface path before change;
a safety parameter and information for changing the control surface path;
serving cell identification information of the second terminal; and
fifth indication information, indicating an action that needs to be executed by a layer 2 after a path is changed.

Specifically, when determining that a preset control plane path change condition is met, the network-side device can send a second message to the first terminal, where the control plane path change condition includes at least one of the following:
transmission of control plane data in the direct path of the first terminal cannot meet a transmission requirement, for example, an RSRP from the first terminal to the serving base station is less than a specified threshold;
the first terminal supports transmission of the control plane data in only one path; and
transmission of the control plane data in the indirect path of the first terminal can meet the transmission requirement, for example, an RSRP between the two UEs is greater than a specified threshold, and an RSRP of the Uu interface of the second UE is greater than a specified threshold, and the like.

The path establishment method provided in embodiments of this application may be performed by a path establishment method apparatus. In embodiments of the application, the path establishment method apparatus provided in embodiments of this application is described by using an example in which the path establishment method apparatus performs the path establishment method method.

An embodiment of this application provides a path establishment apparatus, which is used in a first terminal 300. As shown in FIG. 7, the first terminal 300 includes:
a first processing module 310, configured to: when a first path is established, establish a second path with a network-side device.

The first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

In this embodiment of this application, a multi-path connection can be established between the first terminal and the network-side device. Different signaling and business data can be transmitted between the first terminal and the network-side device through a plurality of paths. This can improve a throughput of communication transmission. When link quality of one path is poor, another path with better link quality can be used to ensure reliability of transmission.

In some embodiments, the first processing module 310 is configured to: when a first path establishment condition is met, send a first request to the network-side device, where the first request is used to request to establish the second path.

In some embodiments, the first request includes first information, and the first information includes at least one of the following:
signal quality between the first terminal and the second terminal;
identification information of the second terminal;
serving cell identification information of the second terminal;
signal quality between the second terminal and the network-side device; and
signal quality between the first terminal and the network-side device.

In some embodiments, when the first path is the indirect path for the first terminal to communicate with the network-side device by using the second terminal, and the second path is the direct path for the first terminal to communicate directly with the network-side device, the first path establishment condition includes at least one of the following:
a data buffer size of the first terminal is greater than or equal to a first threshold;
a service reliability requirement parameter of the first terminal is greater than or equal to a second threshold;
an upper layer protocol of the first terminal requires a service to be transmitted through the second path or through the first path and the second path;
a paging message is received from the network-side device, to indicate to establish the second path;
link quality between the first terminal and a serving base station meets a communication condition;
the first terminal is allowed to perform multi-path transmission; and
at least some services of the first terminal are allowed to be transmitted through a plurality of paths.

In some embodiments, when the first path is the direct path for the first terminal to communicate directly with the network-side device, and the second path is the indirect path for the first terminal to communicate with the network-side device by using the second terminal, the first path establishment condition includes at least one of the following:
a data buffer size of the first terminal is greater than or equal to a first threshold;
a service reliability requirement parameter of the first terminal is greater than or equal to a second threshold;
an upper layer protocol of the first terminal requires a service to be transmitted through the second path or through the first path and the second path;
a paging message is received from the network-side device, to indicate to establish the second path;
link quality between the first terminal and the second terminal meets a communication condition;
the first terminal is allowed to perform multi-path transmission; and
at least some services of the first terminal are allowed to be transmitted through a plurality of paths.

In some embodiments, the first processing module 310 is configured to receive first indication information from the network-side device, where the first indication information is used to indicate to establish the second path.

In some embodiments, when the first path is the indirect path for the first terminal to communicate with the network-side device by using the second terminal, and the second path is the direct path for the first terminal to communicate directly with the network-side device, the first processing module 310 is configured to receive at least one of the following information from the network-side device:
configuration information of the direct path between the first terminal and the network-side device;
serving cell identification information of the first terminal;
second indication information, indicating an action that needs to be executed by a layer 2 after a path is added; and
a rule for transmitting user plane data through the first path and the second path.

In some embodiments, when the first path is the direct path for the first terminal to communicate directly with the network-side device, and the second path is the indirect path for the first terminal to communicate with the network-side device by using the second terminal, the first processing module 310 is configured to receive at least one of the following information from the network-side device:
configuration information of a link between the first terminal and the second terminal;
serving cell identification information of the second terminal;
second indication information, indicating an action that needs to be executed by a layer 2 after a path is added; and
a rule for transmitting user plane data through the first path and the second path.

In some embodiments, the first processing module 310 is configured to send a multi-path configuration complete message to the network-side device.

In some embodiments, when the first path is the direct path for the first terminal to communicate directly with the network-side device, and the second path is the indirect path for the first terminal to communicate with the network-side device by using the second terminal, the first processing module 310 is configured to: receive a second message from the network-side device, where the second message includes third indication information, and the third indication information is used to indicate to change from the first path to the second path for transmitting control plane data; use, based on the third indication information, the second path to transmit the control plane data.

In some embodiments, the second message further includes at least one of the following:
configuration information of a link between the first terminal and the second terminal;
fourth indication information, explicitly or implicitly indicating to delete a control surface path before change;
a safety parameter and information for changing the control surface path;
serving cell identification information of the second terminal; and
fifth indication information, indicating an action that needs to be executed by a layer 2 after a path is changed.

In some embodiments, the rule includes any one of the following:
a first part of a data radio bearer DRB of the first terminal is transmitted in only the direct path;
a second part of the DRB of the first terminal is transmitted in only the indirect path;
different parts of the DRB of the first terminal are transmitted in both the direct path and the indirect path; and
the DRB of the first terminal is transmitted in both the direct path and the indirect path after replication.

In some implementations, when different parts of the DRB of the first terminal are transmitted in both the direct path and the indirect path, or when the DRB of the first terminal is transmitted in both the direct path and the indirect path after replication, the rule includes any one of the following:
the DRB is transmitted by default in the first path or the second path;
after a preset condition parameter is satisfied, the DRB is transmitted in both the direct path and the indirect path;
the DRB is transmitted in both the direct path and the indirect path after replication; and
the DRB is replicated or not replicated.

In some embodiments, the second indication information indicates at least one of the following:
whether a packet data convergence protocol PDCP entity corresponding to the DRB needs to be reestablished;
whether data recovery needs to be performed for the PDCP entity corresponding to the DRB;
whether a new radio link control RLC entity corresponding to the DRB needs to be established;
a configuration parameter of a media access control MAC entity corresponding to the DRB;
whether a PDCP entity corresponding to a signaling radio bearer SRB needs to be reestablished;
whether data recovery needs to be performed for the PDCP entity corresponding to the SRB;
whether a new RLC entity corresponding to the SRB needs to be established; and
a configuration parameter of a MAC entity corresponding to the SRB.

In some embodiments, the first processing module 310 receives a paging message from the network-side device, where the paging message includes at least one of the following:
indicating the first terminal to establish the first path and/or the second path; and
when indicating the first terminal to establish a single path, indicating whether the established path is a direct path or an indirect path.

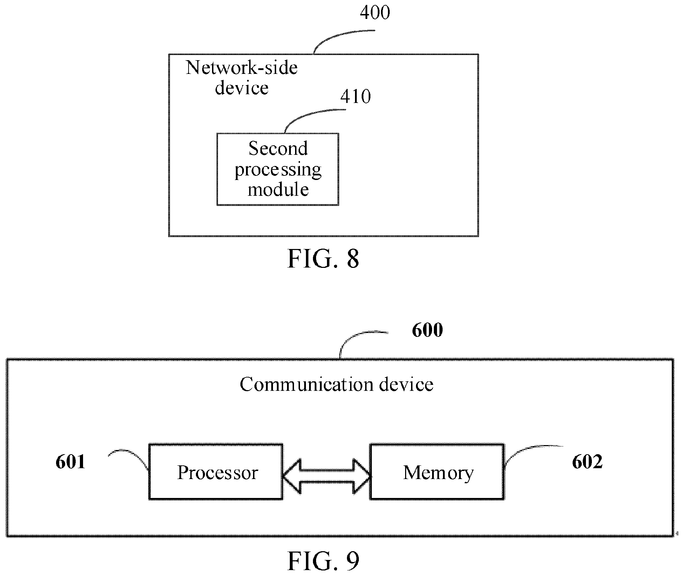

An embodiment of this application provides a path establishment apparatus, which is used in a network-side device 400. As shown in FIG. 8, the network-side device 400 includes:
a second processing module 410, configured to: when a first path is established, establish a second path with a first terminal.

The first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

In this embodiment of this application, a multi-path connection can be established between the first terminal and the network-side device. Different signaling and business data can be transmitted between the first terminal and the network-side device through a plurality of paths. This can improve a throughput of communication transmission. When link quality of one path is poor, another path with better link quality can be used to ensure reliability of transmission.

In some embodiments, the second processing module 410 is configured to receive a first request sent by the first terminal, where the first request is used to request to establish the second path, and the first request is sent by the first terminal after determining that a preset first path establishment condition is met.

In some embodiments, the first request includes first information, and the first information includes at least one of the following:
signal quality between the first terminal and the second terminal;
identification information of the second terminal;
serving cell identification information of the second terminal;
signal quality between the second terminal and the network-side device; and
signal quality between the first terminal and the network-side device.

In some embodiments, the second processing module 410 is configured to send first indication information to the first terminal, where the first indication information is used to indicate to establish the second path.

In some embodiments, the second processing module 410 is configured to determine that a preset second path establishment condition is met.

In some embodiments, the second processing module 410 is configured to receive a multi-path configuration complete message sent by the first terminal.

In some embodiments, when the first path is the indirect path for the first terminal to communicate with the network-side device by using the second terminal, and the second path is the direct path for the first terminal to communicate directly with the network-side device, the second path establishment condition includes at least one of the following:
a size of a data buffer status report of the first terminal is greater than or equal to a third threshold;
a service reliability requirement parameter of the first terminal is greater than or equal to a fourth threshold;
a core network element requires a service to be transmitted through the second path or through the first path and the second path;
downlink data arrives;
link quality between the first terminal and a serving base station meets a communication condition;
the first terminal is allowed to perform multi-path transmission; and
at least some services of the first terminal are allowed to be transmitted through a plurality of paths.

In some embodiments, when the first path is the direct path for the first terminal to communicate directly with the network-side device, and the second path is the indirect path for the first terminal to communicate with the network-side device by using the second terminal, the second path establishment condition includes at least one of the following:
a size of a data buffer status report of the first terminal is greater than or equal to a third threshold;
a service reliability requirement parameter of the first terminal is greater than or equal to a fourth threshold;
a core network element requires a service to be transmitted through the second path or through the first path and the second path;
downlink data arrives;
link quality between the first terminal and the second terminal meets a communication condition;
the first terminal is allowed to perform multi-path transmission; and
at least some services of the first terminal are allowed to be transmitted through a plurality of paths.

In some embodiments, when the first path is the indirect path for the first terminal to communicate with the network-side device by using the second terminal, and the second path is the direct path for the first terminal to communicate directly with the network-side device, the second processing module 410 is configured to send at least one of the following information to the first terminal:
configuration information of the direct path between the first terminal and the network-side device;
serving cell identification information of the first terminal;
second indication information, indicating an action that needs to be executed by a layer 2 after a path is added; and
a rule for transmitting user plane data through the first path and the second path.

In some embodiments, when the first path is the direct path for the first terminal to communicate directly with the network-side device, and the second path is the indirect path for the first terminal to communicate with the network-side device by using the second terminal, the second processing module 410 is configured to send at least one of the following information to the first terminal:
configuration information of a link between the first terminal and the second terminal;
serving cell identification information of the second terminal;
second indication information, indicating an action that needs to be executed by a layer 2 after a path is added; and
a rule for transmitting user plane data through the first path and the second path.

In some embodiments, when the first path is the direct path for the first terminal to communicate directly with the network-side device, and the second path is the indirect path for the first terminal to communicate with the network-side device by using the second terminal, the second processing module 410 is configured to send a reconfiguration message to the second terminal, where the reconfiguration message includes at least one of the following:
configuration information of a link between the first terminal and the second terminal;
bearer configuration information newly added by the second terminal on a Uu interface; and
serving cell identification information of the first terminal.

In some embodiments, when the first path is the direct path for the first terminal to communicate directly with the network-side device, and the second path is the indirect path for the first terminal to communicate with the network-side device by using the second terminal, the second processing module 410 is configured to send a second message to the first terminal, where the second message includes third indication information, and the third indication information is used to indicate to change from the first path to the second path for transmitting control plane data.

In some embodiments, the second message includes at least one of the following:
configuration information of a link between the first terminal and the second terminal;
fourth indication information, explicitly or implicitly indicating to delete a control surface path before change;
a safety parameter and information for changing the control surface path;
serving cell identification information of the second terminal; and
fifth indication information, indicating an action that needs to be executed by a layer 2 after a path is changed.

In some embodiments, the second processing module 410 is configured to determine that a preset control plane path change condition is met, where the control plane path change condition includes at least one of the following:
transmission of control plane data in the direct path of the first terminal cannot meet a transmission requirement;
the first terminal supports transmission of the control plane data in only one path; and
transmission of the control plane data in the indirect path of the first terminal can meet the transmission requirement.

In some embodiments, the rule includes any one of the following:
a first part of a data radio bearer DRB of the first terminal is transmitted in only the direct path;
a second part of the DRB of the first terminal is transmitted in only the indirect path;
different parts of the DRB of the first terminal are transmitted in both the direct path and the indirect path; and
the DRB of the first terminal is transmitted in both the direct path and the indirect path after replication.

In some implementations, when different parts of the DRB of the first terminal are transmitted in both the direct path and the indirect path, or when the DRB of the first terminal is transmitted in both the direct path and the indirect path after replication, the rule includes any one of the following:
the DRB is transmitted by default in the first path or the second path;
after a preset condition parameter is satisfied, the DRB is transmitted in both the direct path and the indirect path;
the DRB is transmitted in both the direct path and the indirect path after replication; and
the DRB is replicated or not replicated.

In some embodiments, the second indication information indicates at least one of the following:
whether a packet data convergence protocol PDCP entity corresponding to the DRB needs to be reestablished;
whether data recovery needs to be performed for the PDCP entity corresponding to the DRB;
whether a new radio link control RLC entity corresponding to the DRB needs to be established;
a configuration parameter of a media access control MAC entity corresponding to the DRB;
whether a PDCP entity corresponding to a signaling radio bearer SRB needs to be reestablished;
whether data recovery needs to be performed for the PDCP entity corresponding to the SRB;
whether a new RLC entity corresponding to the SRB needs to be established; and
a configuration parameter of a MAC entity corresponding to the SRB.

In some embodiments, the second processing module 410 is configured to send a paging message to the first terminal, where the paging message includes at least one of the following:
indicating the first terminal to establish the first path and/or the second path; and
when indicating the first terminal to establish a single path, indicating whether the established path is a direct path or an indirect path.

The path establishment apparatus in embodiments of this application may be an electronic device, for example, an electronic device having an operating system, or may be a component in an electronic device, for example, an integrated circuit or a chip. The electronic device may be a terminal or a device other than the terminal. For example, the terminal may include, but is not limited to, a type of the terminal 11 listed above, and the another device may be a server or a network attached storage (Network Attached Storage, NAS). This is not limited in embodiments of this application.

The path establishment apparatus according to this embodiment of this application can implement all processes implemented by the electronic device described in the relevant embodiments shown in FIG. 5 to FIG. 6, details of which are omitted here for brevity.

Optionally, as shown in FIG. 9, an embodiment of this application further provides a communication device 600, including a processor 601 and a memory 602. The memory 602 stores programs or instructions that can be run on the processor 601. For example, when the communication device 600 is the network-side device, the programs or instructions are executed by the processor 601 to implement the steps of the embodiments of the path establishment method, and the same technical effect can be achieved. When the communication device 600 is the terminal, the programs or instructions are executed by the processor 601 to implement the steps of the embodiments of the path establishment method, and the same technical effect can be achieved. To avoid repetition, details are not described herein again.

An embodiment of this application further provides a network-side device. The network-side device includes a memory and a processor. The memory stores a program or instructions that are capable of being run on the processor, and when the program or the instructions are executed by the processor, the steps of the foregoing path establishment method are implemented.

An embodiment of this application further provides a network-side device, including a processor and a communication interface. The communication interface is configured to: when a first path is established, establish a second path with a first terminal.

The first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

An embodiment of this application further provides a terminal. The terminal includes a memory and a processor. The memory stores a program or instructions that are capable of being run on the processor, and when the program or the instructions are executed by the processor, the steps of the foregoing path establishment method are implemented.

An embodiment of this application further provides a terminal, including a processor and a communication interface. The communication interface is configured to: when a first path is established, establish a second path with a network-side device.

The first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

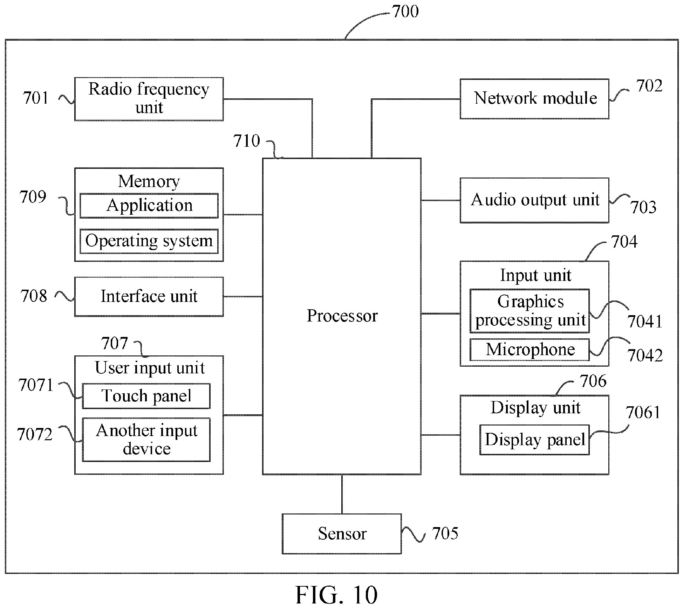

An embodiment of this application further provides a terminal, including a processor and a communication interface. The embodiment of the terminal corresponds to the method embodiment of the terminal side, and implementation processes and implementations of the method embodiment can be applied to the embodiment of the terminal, and the same technical effect can be achieved. Specifically, FIG. 10 is a schematic diagram of a hardware structure of a terminal according to an embodiment of this application.

A terminal 700 includes, but is not limited to: at least some components of a radio frequency unit 701, a network module 702, an audio output unit 703, an input unit 704, a sensor 705, a display unit 706, a user input unit 707, an interface unit 708, a memory 709, a processor 710, and the like.

A person skilled in the art can understand that the terminal 700 may further include a power supply (for example, a battery) for supplying power to each component. The power supply may be logically connected to the processor 710 by using a power management system, thereby implementing functions such as charging, discharging, and power consumption management by using the power management system. The structure of the terminal shown in FIG. 10 does not constitute a limitation on the terminal, and the terminal may include more or fewer components than those shown in the figure, or combine some components, or have different component arrangements. Details are not described herein again.

It should be understood that in embodiments of this application, the input unit 704 may include a graphics processing unit (Graphics Processing Unit, GPU) 7041 and a microphone 7042. The graphics processing unit 7041 performs processing on image data of a static picture or a video that is obtained by an image capture device (for example, a camera) in a video capture mode or an image capture mode. The display unit 706 may include a display panel 7061. The display panel 7061 may be configured in a form of a liquid crystal display, an organic light-emitting diode, or the like. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include, but not limited to, a physical keyboard, a functional button (for example, a volume control button or a switch button), a track ball, a mouse, and a joystick. Details are not described herein.

In embodiments of this application, the radio frequency unit 701 receives downlink data from a network side device, and then transmits the downlink data to the processor 710 for processing. In addition, the radio frequency unit 701 may transmit uplink data to the network side device. Generally, the radio frequency unit 701 includes, but is not limited to, an antenna, an amplifier, a transceiver, a coupler, a low noise amplifier, a duplexer, and the like.

The memory 709 can be configured to store a software program and various data. The memory 709 may mainly include a first storage area for storing programs and instructions and a second storage area for storing data. The first storage area may store an operating system, an application required by at least one function (for example, a sound playing function and an image display function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The non-volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DR RAM). The memory 709 in embodiments of this application includes, but is not limited to these and any other suitable types of memories.

The processor 710 may include one or more processing units. Optionally, the processor 710 integrates an application processor and a modem processor. The application processor mainly processes an operating system, a user interface, an application, and the like, and the modem processor mainly processes a wireless communication signal, for example, a baseband processor. It may be understood that the foregoing modem processor may not be integrated into the processor 710.

The processor 710 is configured to: when a first path is established, establish a second path with a network-side device.

The first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

In this embodiment of this application, a multi-path connection can be established between the first terminal and the network-side device. Different signaling and business data can be transmitted between the first terminal and the network-side device through a plurality of paths. This can improve a throughput of communication transmission. When link quality of one path is poor, another path with better link quality can be used to ensure reliability of transmission.

In some embodiments, the processor 710 is configured to: when a first path establishment condition is met, send a first request to the network-side device, where the first request is used to request to establish the second path.

In some embodiments, the first request includes first information, and the first information includes at least one of the following:
signal quality between the first terminal and the second terminal;
identification information of the second terminal;
serving cell identification information of the second terminal;
signal quality between the second terminal and the network-side device; and
signal quality between the first terminal and the network-side device.

In some embodiments, when the first path is the indirect path for the first terminal to communicate with the network-side device by using the second terminal, and the second path is the direct path for the first terminal to communicate directly with the network-side device, the first path establishment condition includes at least one of the following:
a data buffer size of the first terminal is greater than or equal to a first threshold;
a service reliability requirement parameter of the first terminal is greater than or equal to a second threshold;
an upper layer protocol of the first terminal requires a service to be transmitted through the second path or through the first path and the second path;
a paging message is received from the network-side device, to indicate to establish the second path;
link quality between the first terminal and a serving base station meets a communication condition;
the first terminal is allowed to perform multi-path transmission; and
at least some services of the first terminal are allowed to be transmitted through a plurality of paths.

In some embodiments, when the first path is the direct path for the first terminal to communicate directly with the network-side device, and the second path is the indirect path for the first terminal to communicate with the network-side device by using the second terminal, the first path establishment condition includes at least one of the following:
a data buffer size of the first terminal is greater than or equal to a first threshold;
a service reliability requirement parameter of the first terminal is greater than or equal to a second threshold;
an upper layer protocol of the first terminal requires a service to be transmitted through the second path or through the first path and the second path;
a paging message is received from the network-side device, to indicate to establish the second path;
link quality between the first terminal and the second terminal meets a communication condition;
the first terminal is allowed to perform multi-path transmission; and
at least some services of the first terminal are allowed to be transmitted through a plurality of paths.

In some embodiments, the processor 710 is configured to receive first indication information from the network-side device, where the first indication information is used to indicate to establish the second path.

In some embodiments, when the first path is the indirect path for the first terminal to communicate with the network-side device by using the second terminal, and the second path is the direct path for the first terminal to communicate directly with the network-side device, the processor 710 is configured to receive at least one of the following information from the network-side device:
configuration information of the direct path between the first terminal and the network-side device;
serving cell identification information of the first terminal;
second indication information, indicating an action that needs to be executed by a layer 2 after a path is added; and
a rule for transmitting user plane data through the first path and the second path.

In some embodiments, when the first path is the direct path for the first terminal to communicate directly with the network-side device, and the second path is the indirect path for the first terminal to communicate with the network-side device by using the second terminal, the processor 710 is configured to receive at least one of the following information from the network-side device:
configuration information of a link between the first terminal and the second terminal;
serving cell identification information of the second terminal;
second indication information, indicating an action that needs to be executed by a layer 2 after a path is added; and
a rule for transmitting user plane data through the first path and the second path.

In some embodiments, the processor 710 is configured to send a multi-path configuration complete message to the network-side device.

In some embodiments, when the first path is the direct path for the first terminal to communicate directly with the network-side device, and the second path is the indirect path for the first terminal to communicate with the network-side device by using the second terminal, the processor 710 is configured to: receive a second message from the network-side device, where the second message includes third indication information, and the third indication information is used to indicate to change from the first path to the second path for transmitting control plane data; use, based on the third indication information, the second path to transmit the control plane data.

In some embodiments, the second message further includes at least one of the following:
configuration information of a link between the first terminal and the second terminal;
fourth indication information, explicitly or implicitly indicating to delete a control surface path before change;
a safety parameter and information for changing the control surface path;
serving cell identification information of the second terminal; and
fifth indication information, indicating an action that needs to be executed by a layer 2 after a path is changed.

In some embodiments, the rule includes any one of the following:
a first part of a data radio bearer DRB of the first terminal is transmitted in only the direct path;
a second part of the DRB of the first terminal is transmitted in only the indirect path;
different parts of the DRB of the first terminal are transmitted in both the direct path and the indirect path; and
the DRB of the first terminal is transmitted in both the direct path and the indirect path after replication.

In some implementations, when different parts of the DRB of the first terminal are transmitted in both the direct path and the indirect path, or when the DRB of the first terminal is transmitted in both the direct path and the indirect path after replication, the rule includes any one of the following:
the DRB is transmitted by default in the first path or the second path;
after a preset condition parameter is satisfied, the DRB is transmitted in both the direct path and the indirect path;
the DRB is transmitted in both the direct path and the indirect path after replication; and
the DRB is replicated or not replicated.

In some embodiments, the second indication information indicates at least one of the following:
whether a packet data convergence protocol PDCP entity corresponding to the DRB needs to be reestablished;
whether data recovery needs to be performed for the PDCP entity corresponding to the DRB;
whether a new radio link control RLC entity corresponding to the DRB needs to be established;
a configuration parameter of a media access control MAC entity corresponding to the DRB;
whether a PDCP entity corresponding to a signaling radio bearer SRB needs to be reestablished;
whether data recovery needs to be performed for the PDCP entity corresponding to the SRB;
whether a new RLC entity corresponding to the SRB needs to be established; and
a configuration parameter of a MAC entity corresponding to the SRB.

In some embodiments, the processor 710 receives a paging message from the network-side device, where the paging message includes at least one of the following:
indicating the first terminal to establish the first path and/or the second path; and
when indicating the first terminal to establish a single path, indicating whether the established path is a direct path or an indirect path.

An embodiment of this application further provides a network-side device, including a processor and a communication interface. The embodiment of the network side device corresponds to the method embodiment of the network-side device, and implementation processes and implementations of the method embodiment can be applied to the embodiment of the network-side device, and the same technical effect can be achieved.

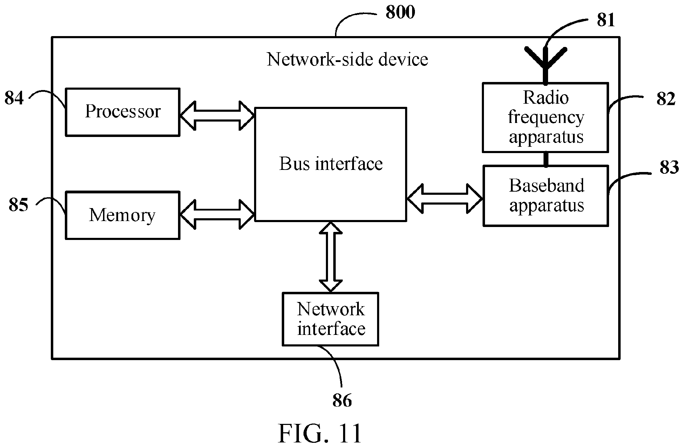

Specifically, an embodiment of this application further provides a network side device. As shown in FIG. 11, a network side device 800 includes: an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81 and sends the received information to the baseband apparatus 83 for processing. In a downlink direction, the baseband apparatus 83 processes to-be-sent information and sends the information to the radio frequency apparatus 82, and the radio frequency apparatus 82 processes the received information and sends the information through the antenna 81.

The method performed by the network side device in the foregoing embodiments may be implemented in the baseband apparatus 83, and the baseband apparatus 83 includes a baseband processor.

The baseband means 83 may include, for example, at least one baseband board. A plurality of chips are provided on the baseband board, as shown in FIG. 11. One of the chips, for example, is a baseband processor, and is connected with the memory 85 through a bus interface, to invoke the programs in the memory 85, so as to perform the operations performed by the network-side device shown in the foregoing method embodiments.

The network side device may further include a network interface 86, and the interface, for example, is a common public radio interface (common public radio interface, CPRI).

Specifically, the network side device 800 in embodiments of the present invention further includes: instructions or programs that are stored in the memory 85 and that can be executed on the processor 84. The processor 84 invokes the instructions or programs in the memory 85 to perform the foregoing path establishment method, and the same technical effect can be achieved. To avoid repetition, details are not described herein again.

An embodiment of this application further provides a readable storage medium. The readable storage medium stores programs and instructions. When the programs and instructions are executed by a processor, the processes of embodiments of the path establishment method is implemented, and the same technical effect can be achieved. To avoid repetition, details are not described herein again.

The processor is the processor in the terminal described in the foregoing embodiments. The readable storage medium includes a computer-readable storage medium, for example, a computer read-only memory ROM, a random access memory RAM, a magnetic disk, or an optical disk.

An embodiment of this application further provides chip. The chip includes a processor and a communication interface. The communication interface is coupled with the processor, and the processor is used to run programs or instructions, to implement the processes of embodiments of the path establishment method, and the same technical effect can be achieved. To avoid repetition, details are not described herein again.

It should be understood that the chip in embodiments of this application may also be referred to as a system level chip, a system chip, a chip system, system-on-chip, or the like.

An embodiment of this application further provides a computer program/program product. The computer program/program product is stored in a storage medium. The computer program/program product is executed by at least one processor, to implement the processes of embodiments of the path establishment method, and the same technical effect can be achieved. To avoid repetition, details are not described herein again.

An embodiment of this application further provides a path establishment system, including: a network-side device and a terminal, where the network-side device can be used to perform the steps of the foregoing path establishment method, and the terminal can be used to perform the steps of the foregoing path establishment method.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" do not exclude that there are still other same elements in the processes, methods, objects, or apparatuses. Further, it should be noted that the scope of the method and the apparatus in embodiments of this application is not limited to performing functions in the order shown or discussed, but may also include performing functions in a substantially simultaneous manner or in reverse order depending on the functions involved, for example, the described method may be performed in a different order than described, and various steps may be added, omitted, or combined. In addition, features described with reference to specific examples can be combined in other examples.

According to the descriptions in the foregoing implementations, a person skilled in the art may clearly learn that the method according to the foregoing embodiment may be implemented by relying on software and a commodity hardware platform or by using hardware. Based on such an understanding, the technical solutions of this application essentially, or the part contributing to the conventional technology, may be presented in the form of a computer software product. The computer software product is stored in a storage medium (for example, a ROM/RAM, a magnetic disk, or an optical disc) including several instructions to enable a terminal (which may be a mobile phone, a computer, a server, a network-side device, or the like) to perform the methods described in embodiments of this application.

Embodiments of this application are described above with reference to the accompanying drawings. This application is not limited to the specific embodiments described above, and the specific embodiments described above are merely exemplary and not limitative. Persons of ordinary skill in the art may make various variations under the teaching of this application without departing from the spirit of this application and the protection scope of the claims, and such variations shall all fall within the protection scope of this application.

## Claims

1. A path establishment method, comprising:
when a first path is established, establishing, by a first terminal, a second path with a network-side device, wherein
the first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

2. The path establishment method according to claim 1, wherein the establishing a second path with a network-side device comprises:
when a first path establishment condition is met,
sending, by the first terminal, a first request to the network-side device, wherein the first request is used to request to establish the second path.

3. The path establishment method according to claim 2, wherein the first request comprises first information, and the first information comprises at least one of the following:
signal quality between the first terminal and the second terminal;
identification information of the second terminal;
serving cell identification information of the second terminal;
signal quality between the second terminal and the network-side device; and
signal quality between the first terminal and the network-side device.

4. The path establishment method according to claim 2, wherein when the first path is the indirect path for the first terminal to communicate with the network-side device by using the second terminal, and the second path is the direct path for the first terminal to communicate directly with the network-side device, the first path establishment condition comprises at least one of the following:
a data buffer size of the first terminal is greater than or equal to a first threshold;
a service reliability requirement parameter of the first terminal is greater than or equal to a second threshold;
an upper layer protocol of the first terminal requires a service to be transmitted through the second path or through the first path and the second path;
a paging message is received from the network-side device, to indicate to establish the second path;
link quality between the first terminal and a serving base station meets a communication condition;
the first terminal is allowed to perform multi-path transmission; and
at least some services of the first terminal are allowed to be transmitted through a plurality of paths.

5. The path establishment method according to claim 2, wherein when the first path is the direct path for the first terminal to communicate directly with the network-side device, and the second path is the indirect path for the first terminal to communicate with the network-side device by using the second terminal, the first path establishment condition comprises at least one of the following:
a data buffer size of the first terminal is greater than or equal to a first threshold;
a service reliability requirement parameter of the first terminal is greater than or equal to a second threshold;
an upper layer protocol of the first terminal requires a service to be transmitted through the second path or through the first path and the second path;
a paging message is received from the network-side device, to indicate to establish the second path;
link quality between the first terminal and the second terminal meets a communication condition;
the first terminal is allowed to perform multi-path transmission; and
at least some services of the first terminal are allowed to be transmitted through a plurality of paths.

6. The path establishment method according to claim 1, wherein the establishing a second path with a network-side device comprises:
receiving, by the first terminal, first indication information from the network-side device, wherein the first indication information is used to indicate to establish the second path.

7. The path establishment method according to claim 6, wherein when the first path is the indirect path for the first terminal to communicate with the network-side device by using the second terminal, and the second path is the direct path for the first terminal to communicate directly with the network-side device, the first terminal alternatively receives at least one of the following information from the network-side device:
configuration information of the direct path between the first terminal and the network-side device;
serving cell identification information of the first terminal;
second indication information, indicating an action that needs to be executed by a layer 2 after a path is added; and
a rule for transmitting user plane data through the first path and the second path.

8. The path establishment method according to claim 6, wherein when the first path is the direct path for the first terminal to communicate directly with the network-side device, and the second path is the indirect path for the first terminal to communicate with the network-side device by using the second terminal, the first terminal alternatively receives at least one of the following information from the network-side device:
configuration information of a link between the first terminal and the second terminal;
serving cell identification information of the second terminal;
second indication information, indicating an action that needs to be executed by a layer 2 after a path is added; and
a rule for transmitting user plane data through the first path and the second path.

9. The path establishment method according to claim 6, wherein after the receiving, by the first terminal, first indication information from the network-side device, the method further comprises:
sending, by the first terminal, a multi-path configuration complete message to the network-side device.

10. The path establishment method according to claim 2 or 6, wherein when the first path is the direct path for the first terminal to communicate directly with the network-side device, and the second path is the indirect path for the first terminal to communicate with the network-side device by using the second terminal, the method further comprises:
receiving, by the first terminal, a second message from the network-side device, wherein the second message comprises third indication information, and the third indication information is used to indicate to change from the first path to the second path for transmitting control plane data; and
using, by the first terminal based on the third indication information, the second path to transmit the control plane data.

11. The path establishment method according to claim 10, wherein the second message further comprises at least one of the following:
configuration information of a link between the first terminal and the second terminal;
fourth indication information, explicitly or implicitly indicating to delete a control surface path before change;
a safety parameter and information for changing the control surface path;
serving cell identification information of the second terminal; and
fifth indication information, indicating an action that needs to be executed by a layer 2 after a path is changed.

12. The path establishment method according to claim 7 or 8, wherein the rule comprises any one of the following:
a first part of a data radio bearer DRB of the first terminal is transmitted in only the direct path;
a second part of the DRB of the first terminal is transmitted in only the indirect path;
different parts of the DRB of the first terminal are transmitted in both the direct path and the indirect path; and
the DRB of the first terminal is transmitted in both the direct path and the indirect path after replication.

13. The path establishment method according to claim 12, wherein when different parts of the DRB of the first terminal are transmitted in both the direct path and the indirect path, or when the DRB of the first terminal is transmitted in both the direct path and the indirect path after replication, the rule comprises any one of the following:
the DRB is transmitted by default in the first path or the second path;
after a preset condition parameter is satisfied, the DRB is transmitted in both the direct path and the indirect path;
the DRB is transmitted in both the direct path and the indirect path after replication; and
the DRB is replicated or not replicated.

14. The path establishment method according to claim 7 or 8, wherein the second indication information indicates at least one of the following:
whether a packet data convergence protocol PDCP entity corresponding to the DRB needs to be reestablished;
whether data recovery needs to be performed for the PDCP entity corresponding to the DRB;
whether a new radio link control RLC entity corresponding to the DRB needs to be established;
a configuration parameter of a media access control MAC entity corresponding to the DRB;
whether a PDCP entity corresponding to a signaling radio bearer SRB needs to be reestablished;
whether data recovery needs to be performed for the PDCP entity corresponding to the SRB;
whether a new RLC entity corresponding to the SRB needs to be established; and
a configuration parameter of a MAC entity corresponding to the SRB.

15. The path establishment method according to claim 1, wherein before the establishing a second path with a network-side device, the method further comprises:
receiving, by the first terminal, a paging message from the network-side device, wherein the paging message comprises at least one of the following:
indicating the first terminal to establish the first path and/or the second path; and
when indicating the first terminal to establish a single path, indicating whether the established path is a direct path or an indirect path.

16. A path establishment method, comprising:
when a first path is established, establishing, by a network-side device, a second path with a first terminal, wherein
the first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

17. The path establishment method according to claim 16, wherein the establishing a second path with a first terminal comprises:
receiving, by the network side device, a first request sent by the first terminal, wherein the first request is used to request to establish the second path, and the first request is sent by the first terminal after determining that a preset first path establishment condition is met.

18. The path establishment method according to claim 17, wherein the first request comprises first information, and the first information comprises at least one of the following:
signal quality between the first terminal and the second terminal;
identification information of the second terminal;
serving cell identification information of the second terminal;
signal quality between the second terminal and the network-side device; and
signal quality between the first terminal and the network-side device.

19. The path establishment method according to claim 16, wherein the establishing a second path with a first terminal comprises:
sending, by the network-side device, first indication information to the first terminal, wherein the first indication information is used to indicate to establish the second path.

20. The path establishment method according to claim 19, wherein before the sending, by the network-side device, first indication information to the first terminal, the method further comprises:
determining, by the network-side device, that a preset second path establishment condition is met.

21. The path establishment method according to claim 19, wherein after the sending, by the network-side device, first indication information to the first terminal, the method further comprises:
receiving, by the network side device, a multi-path configuration complete message sent by the first terminal.

22. The path establishment method according to claim 20, wherein when the first path is the indirect path for the first terminal to communicate with the network-side device by using the second terminal, and the second path is the direct path for the first terminal to communicate directly with the network-side device, the second path establishment condition comprises at least one of the following:
a size of a data buffer status report of the first terminal is greater than or equal to a third threshold;
a service reliability requirement parameter of the first terminal is greater than or equal to a fourth threshold;
a core network element requires a service to be transmitted through the second path or through the first path and the second path;
downlink data arrives;
link quality between the first terminal and a serving base station meets a communication condition;
the first terminal is allowed to perform multi-path transmission; and
at least some services of the first terminal are allowed to be transmitted through a plurality of paths.

23. The path establishment method according to claim 20, wherein when the first path is the direct path for the first terminal to communicate directly with the network-side device, and the second path is the indirect path for the first terminal to communicate with the network-side device by using the second terminal, the second path establishment condition comprises at least one of the following:
a size of a data buffer status report of the first terminal is greater than or equal to a third threshold;
a service reliability requirement parameter of the first terminal is greater than or equal to a fourth threshold;
a core network element requires a service to be transmitted through the second path or through the first path and the second path;
downlink data arrives;
link quality between the first terminal and the second terminal meets a communication condition;
the first terminal is allowed to perform multi-path transmission; and
at least some services of the first terminal are allowed to be transmitted through a plurality of paths.

24. The path establishment method according to claim 19, wherein when the first path is the indirect path for the first terminal to communicate with the network-side device by using the second terminal, and the second path is the direct path for the first terminal to communicate directly with the network-side device, the network-side device further sends at least one of the following information to the first terminal:
configuration information of the direct path between the first terminal and the network-side device;
serving cell identification information of the first terminal;
second indication information, indicating an action that needs to be executed by a layer 2 after a path is added; and
a rule for transmitting user plane data through the first path and the second path.

25. The path establishment method according to claim 19, wherein when the first path is the direct path for the first terminal to communicate directly with the network-side device, and the second path is the indirect path for the first terminal to communicate with the network-side device by using the second terminal, the network-side device further sends at least one of the following information to the first terminal:
configuration information of a link between the first terminal and the second terminal;
serving cell identification information of the second terminal;
second indication information, indicating an action that needs to be executed by a layer 2 after a path is added; and
a rule for transmitting user plane data through the first path and the second path.

26. The path establishment method according to claim 19, wherein when the first path is the direct path for the first terminal to communicate directly with the network-side device, and the second path is the indirect path for the first terminal to communicate with the network-side device by using the second terminal, before, after, or when the sending, by the network-side device, first indication information to the first terminal, the method further comprises:
sending, by the network-side device, a reconfiguration message to the second terminal, wherein the reconfiguration message comprises at least one of the following:
configuration information of a link between the first terminal and the second terminal;
bearer configuration information newly added by the second terminal on a Uu interface; and
serving cell identification information of the first terminal.

27. The path establishment method according to claim 17 or 19, wherein when the first path is the direct path for the first terminal to communicate directly with the network-side device, and the second path is the indirect path for the first terminal to communicate with the network-side device by using the second terminal, the method further comprises:
sending, by the network-side device, a second message to the first terminal, wherein the second message comprises third indication information, and the third indication information is used to indicate to change from the first path to the second path for transmitting control plane data.

28. The path establishment method according to claim 27, wherein the second message comprises at least one of the following:
configuration information of a link between the first terminal and the second terminal;
fourth indication information, explicitly or implicitly indicating to delete a control surface path before change;
a safety parameter and information for changing the control surface path;
serving cell identification information of the second terminal; and
fifth indication information, indicating an action that needs to be executed by a layer 2 after a path is changed.

29. The path establishment method according to claim 27, wherein before the sending, by the network-side device, a second message to the first terminal, the method further comprises:
determining, by the network-side device, that a preset control plane path change condition is met, wherein the control plane path change condition comprises at least one of the following:
transmission of control plane data in the direct path of the first terminal cannot meet a transmission requirement;
the first terminal supports transmission of the control plane data in only one path; and
transmission of the control plane data in the indirect path of the first terminal can meet the transmission requirement.

30. The path establishment method according to claim 24 or 25, wherein the rule comprises any one of the following:
a first part of a data radio bearer DRB of the first terminal is transmitted in only the direct path;
a second part of the DRB of the first terminal is transmitted in only the indirect path;
different parts of the DRB of the first terminal are transmitted in both the direct path and the indirect path; and
the DRB of the first terminal is transmitted in both the direct path and the indirect path after replication.

31. The path establishment method according to claim 30, wherein when different parts of the DRB of the first terminal are transmitted in both the direct path and the indirect path, or when the DRB of the first terminal is transmitted in both the direct path and the indirect path after replication, the rule comprises any one of the following:
the DRB is transmitted by default in the first path or the second path;
after a preset condition parameter is satisfied, the DRB is transmitted in both the direct path and the indirect path;
the DRB is transmitted in both the direct path and the indirect path after replication; and
the DRB is replicated or not replicated.

32. The path establishment method according to claim 24 or 25, wherein the second indication information indicates at least one of the following:
whether a packet data convergence protocol PDCP entity corresponding to the DRB needs to be reestablished;
whether data recovery needs to be performed for the PDCP entity corresponding to the DRB;
whether a new radio link control RLC entity corresponding to the DRB needs to be established;
a configuration parameter of a media access control MAC entity corresponding to the DRB;
whether a PDCP entity corresponding to a signaling radio bearer SRB needs to be reestablished;
whether data recovery needs to be performed for the PDCP entity corresponding to the SRB;
whether a new RLC entity corresponding to the SRB needs to be established; and
a configuration parameter of a MAC entity corresponding to the SRB.

33. The path establishment method according to claim 16, wherein before the establishing a second path with a first terminal, the method further comprises:
sending, by the network-side device, a paging message to the first terminal, wherein the paging message comprises at least one of the following:
indicating the first terminal to establish the first path and/or the second path; and
when indicating the first terminal to establish a single path, indicating whether the established path is a direct path or an indirect path.

34. A path establishment apparatus, comprising:
a first processing module, configured to: when a first path is established, establish a second path with a network-side device, wherein
the first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

35. A path establishment apparatus, comprising:
a second processing module, configured to: when a first path is established, establish a second path with a first terminal, wherein
the first path is a direct path for the first terminal to communicate directly with the network-side device, and the second path is an indirect path for the first terminal to communicate with the network-side device by using a second terminal; or
the first path is an indirect path for the first terminal to communicate with the network-side device by using the second terminal, and the second path is a direct path for the first terminal to communicate directly with the network-side device.

36. A terminal, comprising a memory and a processor, wherein the memory stores a program or instructions that are capable of being run on the processor, and when the program or the instructions are executed by the processor, the steps of the path establishment method according to any one of claims 1 to 15 are implemented.

37. A network-side device, comprising a memory and a processor, wherein the memory stores a program or instructions that are capable of being run on the processor, and when the program or the instructions are executed by the processor, the steps of the path establishment method according to any one of claims 16 to 33 are implemented.

38. A readable storage medium, wherein the readable storage medium stores a program or instructions, and when the program or the instructions are executed by a processor, the steps of the path establishment method according to any one of claims 1 to 15 are implemented, or the steps of the path establishment method according to any one of claims 16 to 33 are implemented.
